# EUROPEAN PATENT APPLICATION

(11) **EP 4 841 529 A2**
(43) Date of publication of application: **18.11.2026**
(21) Application number: 26177439.2
(22) Date of filing: 29.06.2021
(51) Int. Cl.: G06N 20/00

(54) **HUMAN-MACHINE INTERACTION METHOD AND APPARATUS, DEVICE, AND VEHICLE**

(62) Document number(s) of the earlier application(s) in accordance with Art. 76 EPC: 21947459.0 / 4 354 426
(71) Applicant: Yinwang Intelligent Technologies Co., Ltd., Shenzhen, Guangdong 518110 (CN)
(72) Inventor: Pan, Jingshen, Shenzhen, 518110 (CN); Su, Qi, Shenzhen, 518110 (CN); Nie, Weiran, Shenzhen, 518110 (CN)
(74) Representative: Henselmann, Alexander Gerhard

(57) **Abstract**

This invention is applicable to the field of assisted driving, and specifically provides a human-machine interaction method and apparatus, a device, and a vehicle. The human-machine interaction method includes: obtaining information expressed by a user, and obtaining an experience intention of the user based on the information expressed by the user; obtaining a plurality of recommended policy actions based on status information of an in-vehicle infotainment and the experience intention of the user, where the policy action is used to control the in-vehicle infotainment and is configured with a score; adjusting scores of the plurality of policy actions based on policy preference information of the user; and determining, based on adjusted scores, a policy action for controlling the in-vehicle infotainment, to execute control on the in-vehicle infotainment. In this invention, a policy action that meets a current scenario and a user preference may be provided based on a user's expression habit, to meet a user's expectation on human-machine interaction and improve user experience evaluation.

## Description

### TECHNICAL FIELD

This invention relates to the field of human-machine interaction technologies, and in particular, to a human-machine interaction method and apparatus, a device, and a vehicle.

### BACKGROUND

In a current in-vehicle task-oriented human-machine interaction system, user expressions are generally bound to system actions, and consequently, the current in-vehicle task-oriented human-machine interaction system cannot adapt to different user expression habits, dynamic space environments, device conditions, and the like.

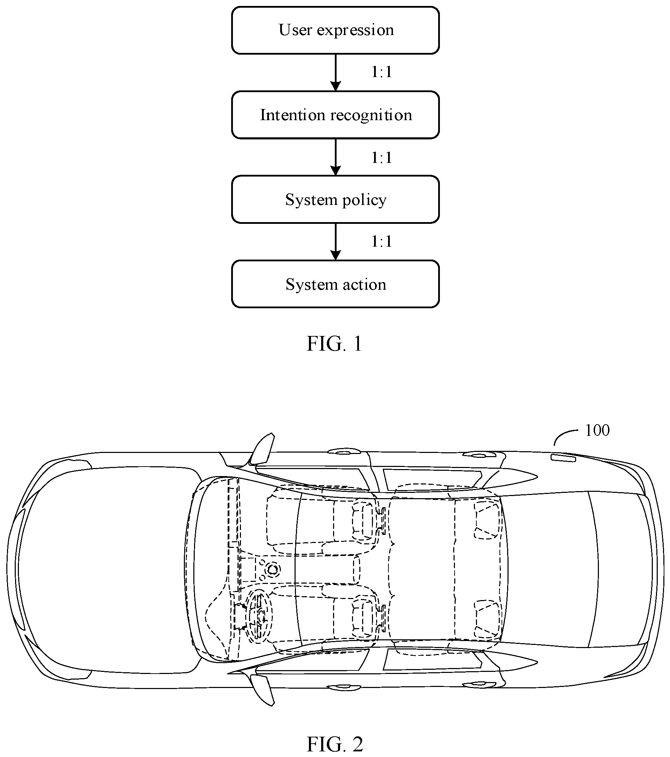

As shown in FIG. 1, in the current in-vehicle task-oriented human-machine interaction system, user expression information may be obtained by using a plurality of types of modal information obtained by using a plurality of sensors, and a related user intention is obtained through pattern matching. A corresponding system policy is provided for the user intention, and a final system action is executed based on a system feedback. In an entire pattern matching process, related features of the user expression, user intention, and system policy are matched correspondingly. A fundamental reason is that the current in-vehicle human-machine interaction system mainly focuses on deducing the user expression based on a service function, instead of recommending the service function based on the user expression. An advantage of this design is that all service functions can be easily converted into corresponding user expressions based on downstream service interface commands and parameters, to implement direct voice interaction between the user expressions and the service functions. A disadvantage of this design is that diversity of a subjective expression and ambiguity of a subjective expression requirement of a user as a subject are ignored. Especially when the user is not familiar with a device operation, the user expression is generally a subjective expression of an experience requirement rather than an objective description of the device operation. Due to empathy, when a human-machine interaction policy is implemented by using a voice, a human expectation on in-vehicle infotainment feedback increases. Therefore, when the subjective expression of the user cannot cause the in-vehicle infotainment feedback, or an in-vehicle infotainment feedback policy is invalid, user's evaluation on the interaction system is greatly reduced.

### SUMMARY

In view of this, this invention provides a human-machine interaction method and apparatus, a device, and a vehicle, to provide, based on a user's expression habit, a policy action that meets a current scenario and a user preference, thereby meeting a user's expectation on human-machine interaction and improving user experience evaluation.

It should be understood that, in the solutions provided in this invention, the human-machine interaction method may be performed by a human-machine interaction apparatus or some components in the human-machine interaction apparatus. The human-machine interaction apparatus may be a human-machine interaction interface (Human Machine Interface, HMI), an in-vehicle infotainment (In-Vehicle Infotainment, IVI), an entire vehicle, a server, or the like. Some components in the human-machine interaction apparatus may be a processing chip, a processing circuit, a processor, and the like.

According to a first aspect of this invention, a human-machine interaction method is provided, including: obtaining information expressed by a user, and obtaining an experience intention of the user based on the information expressed by the user; obtaining a plurality of recommended policy actions based on status information of an in-vehicle infotainment and the experience intention of the user, where the policy action is used to control the in-vehicle infotainment and is configured with a score; adjusting scores of the plurality of policy actions based on policy preference information of the user; and determining, based on adjusted scores, a policy action for controlling the in-vehicle infotainment, to execute control on the in-vehicle infotainment.

As described above, in the human-machine interaction method in this invention, an interactive user end may express an experience intention of the interactive user end by using a voice, a gesture, a facial expression, or the like. An interactive device end may perform, by collecting the information expressed by the user, intention recognition based on a preset intention recognition model or an intention recognition algorithm, to obtain a user experience intention corresponding to the information expressed by the user, generate a plurality of recommended policy actions based on the recognized user experience intention and status information of the in-vehicle infotainment, adjust scores of the plurality of recommended policy actions based on the policy preference information of the user, and determine the policy action based on adjusted scores, to control the in-vehicle infotainment. This method is applicable to different user's expression habits and different in-vehicle infotainment statuses, and can dynamically recommend a proper policy action to the user, to meet a user's expectation on human-machine interaction and improve user experience evaluation.

In a possible implementation of the first aspect, the determining, based on adjusted scores, a policy action for controlling the in-vehicle infotainment includes: when the policy action for controlling the in-vehicle infotainment is determined from two or more policy actions, and a difference between the scores of the two or more policy actions is greater than a threshold, determining a policy action with a highest score as the policy action for controlling the in-vehicle infotainment.

As described above, the policy action for controlling the in-vehicle infotainment may be determined from the plurality of recommended policy actions based on the adjusted scores. In this case, if a difference between the scores of two or more policy actions with relatively high scores is greater than the threshold, it may be considered that a policy action with a highest score better meets the experience intention of the user. In this case, the policy action with the highest score may be directly selected to control the in-vehicle infotainment.

In a possible implementation of the first aspect, the method further includes: when the policy action for controlling the in-vehicle infotainment is determined from two or more policy actions, and a difference between the scores of the two or more policy actions is less than the threshold, prompting the user with the two or more policy actions; and receiving selection information of the user, and determining, based on the selection information of the user, the policy action for controlling the in-vehicle infotainment.

As described above, the policy action for controlling the in-vehicle infotainment may be determined from the plurality of recommended policy actions based on the adjusted scores. In this case, if a difference between the scores of two or more policy actions with relatively high scores is less than the threshold, it may be considered that the two or more policy actions all meet the experience intention of the user. In this case, the two or more policy actions may be prompted to the user, the selection information of the user is received, and a policy action that meets a user preference is determined to control the in-vehicle infotainment.

In a possible implementation of the first aspect, the method further includes: updating the policy preference information of the user based on the selection information of the user.

As described above, when two or more policy actions are prompted to the user to select, the policy preference information of the user may be updated based on the selection information of the user, so that the policy preference information of the user better meets a user's use habit. In this invention, the policy preference information of the user may be specifically a preference degree of the user or a frequency of using a policy action by the user, and the policy preference information of the user may better meet a personalized requirement of the user with use of the human-machine interaction method in this invention.

In a possible implementation of the first aspect, the method further includes: updating correlation between any two or more of the information expressed by the user, the experience intention of the user, the plurality of recommended policy actions, and the policy preference information of the user based on the selection information of the user.

As described above, when two or more policy actions are prompted to the user to select, the correlation between the information expressed by the user, the experience intention of the user, the plurality of recommended policy actions, and the policy preference information of the user may be updated based on the selection information of the user, so that the human-machine interaction in this invention can better meet the user preference, and a policy action that meets the user preference can be quickly determined in the subsequent interaction process. This improves user experience.

In a possible implementation of the first aspect, the determining, based on adjusted scores, a policy action for controlling the in-vehicle infotainment includes: determining, based on the adjusted scores, two or more policy actions whose scores are higher than a specified value as policy actions for controlling the in-vehicle infotainment.

As described above, two or more policy actions may be selected from the plurality of recommended policy actions based on the adjusted scores, and are determined as policy actions for controlling the in-vehicle infotainment, to achieve better control effect.

In a possible implementation of the first aspect, the adjusting scores of the plurality of policy actions based on policy preference information of the user includes: performing weighted calculation on the scores of the plurality of policy actions based on the policy preference information of the user.

As described above, when the scores of the plurality of policy actions are adjusted, weighted calculation may be performed on the scores by setting weights based on the policy preference information of the user, and the scores of the plurality of policy actions are adjusted based on a result of the weighted calculation.

In a possible implementation of the first aspect, the information expressed by the user includes one or more of voice information, action information, and facial expression information of the user.

In a possible implementation of the first aspect, when the experience intention of the user is obtained based on the information expressed by the user, the experience intention of the user is further obtained based on body feature information of the user.

As described above, when the information expressed by the user is obtained, the information may be obtained in an expression manner like a voice, a gesture motion, a body motion, or a facial expression of the user, or may be obtained by monitoring a skin temperature, a heart rate, or the like of the user.

In a possible implementation of the first aspect, when the experience intention of the user is obtained based on the information expressed by the user, the experience intention of the user is further obtained based on session history information, where the session history information includes a previously determined policy action for controlling the in-vehicle infotainment.

As described above, a human-machine interaction process in this method may be performed a plurality of rounds. After each round the human-machine interaction ends, a previously determined policy action for controlling the in-vehicle infotainment may be used as a session history, and is applied to a next round of the human-machine interaction process, to obtain a more accurate user experience intention.

In a possible implementation of the first aspect, the status information of the in-vehicle infotainment includes one or more of device status information of the in-vehicle infotainment and environment status information obtained by the in-vehicle infotainment.

As described above, the status information of the in-vehicle infotainment may specifically include device status information like an air conditioner status, a seat status, a speaker status, a display status, a light status, a skylight status, and a vehicle window status, and may further include environment status information like an internal or external temperature, humidity, and air quality of the in-vehicle infotainment.

In a possible implementation of the first aspect, the method further includes: obtaining identity information of the user, and obtaining the policy preference information of the user based on the identity information of the user.

As described above, the policy preference information of the user may be locally stored or stored in cloud in the method. When the identity information of the user is obtained, the policy preference information corresponding to the user may be obtained based on the identity information of the user, so that the human-machine interaction process in this method better meets a personalized requirement of the user.

According to a second aspect of this invention, a human-machine interaction apparatus is provided, including: a recognition module, configured to: obtain information expressed by a user, and obtain an experience intention of the user based on the information expressed by the user; a recommendation module, configured to obtain a plurality of recommended policy actions based on status information of an in-vehicle infotainment and the experience intention of the user, where the policy action is used to control the in-vehicle infotainment and is configured with a score; an adjustment module, configured to adjust scores of the plurality of policy actions based on policy preference information of the user; and an output module, configured to: determine, based on adjusted scores, a policy action for controlling the in-vehicle infotainment, to execute control on the in-vehicle infotainment.

In a possible implementation of the second aspect, the output module is specifically configured to: when the policy action for controlling the in-vehicle infotainment is determined from two or more policy actions, and a difference between the scores of the two or more policy actions is greater than a threshold, determine a policy action with a highest score as the policy action for controlling the in-vehicle infotainment.

In a possible implementation of the second aspect, the output module is further configured to: when the policy action for controlling the in-vehicle infotainment is determined from two or more policy actions, and a difference between the scores of the two or more policy actions is less than the threshold, prompt the user with the two or more policy actions; and receive selection information of the user, and determine, based on the selection information of the user, the policy action for controlling the in-vehicle infotainment.

In a possible implementation of the second aspect, the adjustment module is further configured to: update the policy preference information of the user based on the selection information of the user.

In a possible implementation of the second aspect, the apparatus further includes: a training module, configured to update correlation between any two or more of the information expressed by the user, the experience intention of the user, the plurality of recommended policy actions, and the policy preference information of the user based on the selection information of the user.

In a possible implementation of the second aspect, the output module is specifically configured to determine, based on the adjusted scores, two or more policy actions whose scores are higher than a specified value as policy actions for controlling the in-vehicle infotainment.

In a possible implementation of the second aspect, the adjustment module is specifically configured to: perform weighted calculation on the scores of the plurality of policy actions based on the policy preference information of the user.

In a possible implementation of the second aspect, the information expressed by the user includes one or more of voice information, action information, and facial expression information of the user.

In a possible implementation of the second aspect, when obtaining the experience intention of the user based on the information expressed by the user, the recognition module further obtains the experience intention of the user based on body feature information of the user.

In a possible implementation of the second aspect, when obtaining the experience intention of the user based on the information expressed by the user, the recognition module further obtains the experience intention of the user based on session history information, where the session history information includes a previously determined policy action for controlling the in-vehicle infotainment.

In a possible implementation of the second aspect, the status information of the in-vehicle infotainment includes one or more of device status information of the in-vehicle infotainment and environment status information obtained by the in-vehicle infotainment.

In a possible implementation of the second aspect, the apparatus further includes: an identity authentication module, configured to: obtain identity information of the user, and obtain the policy preference information of the user based on the identity information of the user.

According to a third aspect of this invention, a system is provided, including:
a multi-dimensional sensing apparatus, configured to: collect expression data of a user, and generate information expressed by the user;
an in-vehicle infotainment management apparatus, configured to: collect device status data of an in-vehicle infotainment and environment status data of the in-vehicle infotainment, and generate status information of the in-vehicle infotainment; and
the human-machine interaction apparatus in the plurality of technical solutions provided in the second aspect and the foregoing optional implementations.

In a possible implementation of the third aspect, the human-machine interaction apparatus obtains an experience intention of the user based on the information that is expressed by the user and that is generated by the multi-dimensional sensing apparatus. The human-machine interaction apparatus obtains a plurality of recommended policy actions based on the status information of the in-vehicle infotainment and the experience intention of the user, adjusts scores of the plurality of policy actions based on policy preference information of the user, and determines, based on adjusted scores, a policy action for controlling the in-vehicle infotainment, to execute control on the in-vehicle infotainment.

In a possible implementation of the third aspect, when determining, based on the adjusted scores, the policy action for controlling the in-vehicle infotainment, the human-machine interaction apparatus may determine the policy action for controlling the in-vehicle infotainment from two or more policy actions. When a difference between the scores of the two or more policy actions is greater than a threshold, a policy action with a highest score is determined as the policy action for controlling the in-vehicle infotainment. When a difference between the scores of the two or more policy actions is less than the threshold, the two or more policy actions are prompted to the user, selection information of the user is received, and the policy action for controlling the in-vehicle infotainment is determined based on the selection information of the user. The human-machine interaction apparatus may further determine, based on the adjusted scores, two or more policy actions whose scores are higher than a specified value as policy actions for controlling the in-vehicle infotainment.

In a possible implementation of the third aspect, the human-machine interaction apparatus may update the policy preference information of the user based on the selection information of the user. The human-machine interaction apparatus may further update correlation between any two or more of the information expressed by the user, the experience intention of the user, the plurality of recommended policy actions, and the policy preference information of the user based on the selection information of the user.

In a possible implementation of the third aspect, the human-machine interaction apparatus or the multi-dimensional sensing apparatus may be further configured to: obtain identity information of the user, and obtain the policy preference information of the user based on the identity information of the user.

In a possible implementation of the third aspect, the system is a vehicle.

In a possible implementation of the third aspect, the multi-dimensional sensing apparatus may include one or more of a microphone module, a camera module, or a human body sensor module disposed on the vehicle.

In a possible implementation of the third aspect, the in-vehicle infotainment management apparatus may include one or more of an air conditioner controller, a seat controller, a speaker controller, a display controller, a light controller, a skylight controller, a window controller, a curtain controller, or an environment sensor module disposed on the vehicle.

According to a fourth aspect of this invention, an electronic apparatus is provided, including:
a processor and an interface circuit, where the processor accesses a memory by using the interface circuit, the memory stores program instructions, and when the program instructions are executed by the processor, the processor is enabled to perform the human-machine interaction method in the plurality of technical solutions provided in the first aspect and the foregoing optional implementations.

In a possible implementation of the fourth aspect, when a user performs expression by using a voice, a gesture, a facial expression, or the like that can be collected, the processor may obtain a collection instruction from the memory by using the interface circuit, to collect information like the voice, the gesture, the facial expression, or a body motion of the user, and sort out and generate information expressed by the user. The processor may further obtain a recognition instruction from the memory by using the interface circuit, to recognize an experience intention of the user based on the information expressed by the user. The processor may further obtain a processing instruction from the memory by using the interface circuit, to obtain a plurality of recommended policy actions based on status information of an in-vehicle infotainment and the experience intention of the user, and adjust scores of the plurality of policy actions based on policy preference information of the user. The processor may further obtain an output instruction from the memory by using the interface circuit, to output, based on adjusted scores, a policy action for controlling a vehicle, to implement control on the vehicle.

In a possible implementation of the fourth aspect, the electronic apparatus is one of a human-machine interaction interface and an in-vehicle infotainment.

In a possible implementation of the fourth aspect, the electronic apparatus is a vehicle.

In a possible implementation of the fourth aspect, the electronic apparatus is one of the in-vehicle infotainment and a vehicle-mounted computer.

According to a fifth aspect of this invention, a computing device is provided, including:
a processor; and
a memory, where the memory stores program instructions, and when the program instructions are executed by the processor, the processor is enabled to perform the human-machine interaction method in the plurality of technical solutions provided in the first aspect and the foregoing optional implementations.

In a possible implementation of the fifth aspect, when a user performs expression by using a voice, a gesture, a facial expression, or the like that can be collected, the processor may execute a collection instruction in the memory, to collect information like the voice, the gesture, the facial expression, or a body motion of the user, and sort out and generate information expressed by the user. The processor may further execute a recognition instruction in the memory, to recognize an experience intention of the user based on the information expressed by the user. The processor may further execute a processing instruction in the memory, to obtain a plurality of recommended policy actions based on status information of an in-vehicle infotainment and the experience intention of the user, and adjust scores of the plurality of policy actions based on policy preference information of the user. The processor may further execute an output instruction in the memory, to output, based on adjusted scores, a policy action for controlling a vehicle, to implement control on the vehicle.

In a possible implementation of the fifth aspect, the computing device is one of a human-machine interaction interface and an in-vehicle infotainment.

In a possible implementation of the fifth aspect, the computing device is a vehicle.

In a possible implementation of the fifth aspect, the computing device is one of the in-vehicle infotainment and a vehicle-mounted computer.

According to a sixth aspect of this invention, a computer-readable storage medium is provided, where the computer-readable storage medium stores program instructions, and when the program instructions are executed by a computer, the computer is enabled to perform the human-machine interaction method in the plurality of technical solutions provided in the first aspect and the foregoing optional implementations.

According to a seventh aspect of this invention, a computer program product is provided, where the computer program product includes program instructions, and when the program instructions are executed by a computer, the computer is enabled to perform the human-machine interaction method in the plurality of technical solutions provided in the first aspect and the foregoing optional implementations.

In conclusion, according to the human-machine interaction method and apparatus, the device, and the vehicle that are provided in this invention, the expression information of the user is obtained to recognize the experience intention of the user, and the plurality of recommended policy actions are generated based on the experience intention of the user and the status information of the in-vehicle infotainment, where the generated policy action is used to control the in-vehicle infotainment. Because each user has a different policy preference, the scores of the plurality of policy actions may be adjusted based on the policy preference information of the user, and the policy action for controlling the in-vehicle infotainment is determined based on the adjusted scores. The policy action for controlling the in-vehicle infotainment may be determined directly based on a policy action with a highest score, or may be determined based on the selection information of the user by prompting two or more policy actions whose scores are close to the user. In another implementation of this invention, the selection information of the user may be further used to update the policy preference information of the user, and update the correlation between the information expressed by the user, the experience intention of the user, the plurality of recommended policy actions, and the policy preference information of the user, so that human-machine interaction better meets the personalized preference of the user. The human-machine interaction method and apparatus, the device, and the vehicle provided in this invention are applicable to different user groups without complex learning costs. A policy action that meets a current scenario and a user preference may be provided based on a user's expression habit, to meet a user's expectation on human-machine interaction and improve user experience evaluation.

### BRIEF DESCRIPTION OF DRAWINGS

FIG. 1 is an interaction flowchart of an in-vehicle task-orientated human-machine interaction system;
FIG. 2 is a schematic diagram of an application scenario of a human-machine interaction method according to an embodiment of this invention;
FIG. 3 is a block diagram of an application scenario of a human-machine interaction method according to an embodiment of this invention;
FIG. 4 is a schematic diagram of an architecture of a status processing unit according to an embodiment of this invention;
FIG. 5 is a schematic diagram of reward time distribution according to an embodiment of this invention;
FIG. 6 is a flowchart of a human-machine interaction method according to an embodiment of this invention;
FIG. 7 is a schematic diagram of a policy generation and clarification procedure according to an embodiment of this invention;
FIG. 8A is a schematic diagram of a policy generation procedure of a universal platform;
FIG. 8B is a schematic diagram of a policy generation and clarification procedure according to an embodiment of this invention;
FIG. 9 is a diagram of an architecture of a human-machine interaction apparatus according to an embodiment of this invention;
FIG. 10 is a diagram of an architecture of a computing device according to an embodiment of this invention;
FIG. 11 is a diagram of an architecture of an electronic apparatus according to an embodiment of this invention; and
FIG. 12 is a diagram of an architecture of a human-machine interaction system according to an embodiment of this invention.

It should be understood that, in the foregoing schematic diagrams of structures, sizes and forms of block diagrams are for reference only, and shall not constitute exclusive interpretations to embodiments of the present invention. A relative location and an inclusion relationship between the block diagrams shown in the schematic diagrams of structures only schematically represent a structural association between the block diagrams, rather than limiting a physical connection mode in embodiments of the present invention.

### DESCRIPTION OF EMBODIMENTS

The following further describes the technical solutions provided in this invention with reference to the accompanying drawings and embodiments. It should be understood that system architectures and service scenarios in embodiments of this invention are mainly intended to describe possible implementations of the technical solutions of this invention, and should not be construed as a unique limitation on the technical solutions of this invention. A person of ordinary skill in the art may learn that the technical solutions provided in this invention are also applicable to a similar technical problem as a system structure evolves and a new service scenario emerges.

It should be understood that the human-machine interaction solution provided in embodiments of this invention includes a human-machine interaction method and apparatus, a device, and a vehicle. Because problem-resolving principles of the technical solutions are the same or similar, in the following descriptions of specific embodiments, some repeated parts may not be described herein, but it should be considered that the specific embodiments are mutually referenced and may be combined with each other.

Embodiments of this invention provide a human-machine interaction method and apparatus, a device, and a vehicle, to provide, based on a user's expression habit, a policy action that meets a current scenario and a user preference, thereby meeting a user's expectation on human-machine interaction and improving user experience evaluation. This invention may be applied to a plurality of human-machine interaction technical fields, and may be adapted to a plurality of spatial scenarios, for example, an intelligent driving scenario and a smart home scenario. A device (namely, a "machine" in human-machine interaction) that interacts with a user (namely, a "human" in human-machine interaction) may be a vehicle, a robot, a smart home device, or the like. The following describes this invention in detail.

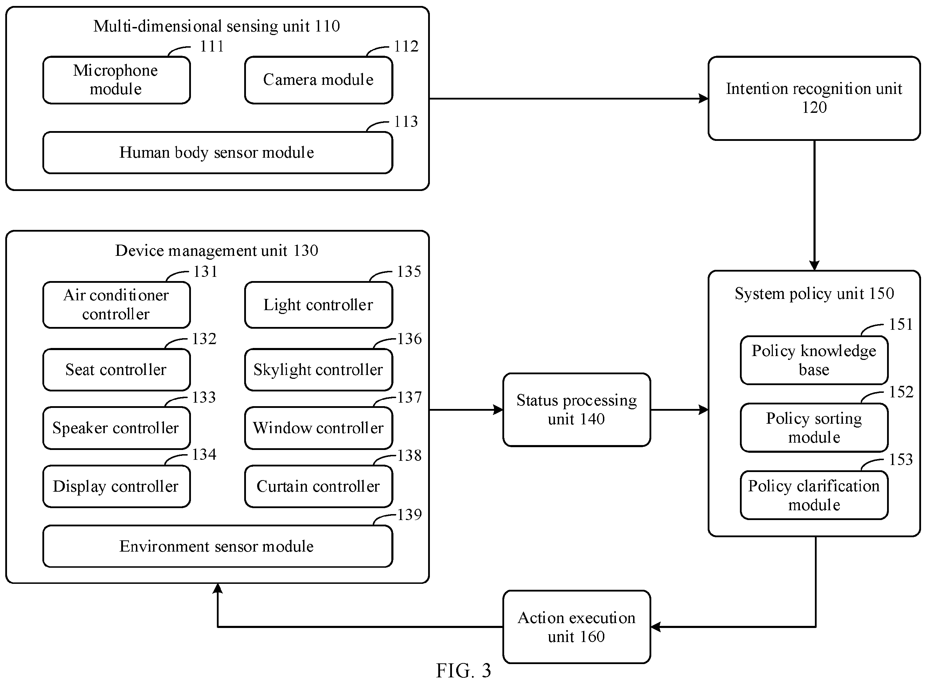

The following first briefly describes an application scenario involved in this embodiment with reference to FIG. 2 and FIG. 3. As shown in FIG. 2, an application scenario of this embodiment specifically relates to a vehicle 100. The vehicle 100 may be a household car, a motor truck, or the like, or may be a special vehicle like an ambulance, a firefighting vehicle, a police vehicle, or an engineering rescue vehicle. In the human-machine interaction method in this embodiment, an interaction object may be a user and a vehicle. The user may be a driver or a passenger of the vehicle 100. The user may express an experience intention of the user by using a voice, a gesture, a facial expression, or the like that can be collected. The vehicle 100 may collect information expressed by the user, to recognize the experience intention of the user, and provide a corresponding policy action based on the experience intention of the user. The vehicle 100 may be provided with a related apparatus that supports the human-machine interaction method in this embodiment outside the vehicle or in a vehicle cockpit, and then generate, recommend, and execute a policy action based on the collected information expressed by the driver or the passenger, to meet the experience intention of the user.

As shown in FIG. 3, a multi-dimensional sensing unit 110, an intention recognition unit 120, a device management unit 130, a status processing unit 140, a system policy unit 150, and an action execution unit 160 that are configured to implement interaction may be disposed in the vehicle 100. Specifically, the multi-dimensional sensing unit 110 is mainly configured to collect information like a voice, a gesture, a facial expression, or a body motion of the user. The multi-dimensional sensing unit 110 may be implemented by using an integrated unit, for example, may be an integrated unit including modules such as a microphone module 111, a camera module 112, and a human body sensor module 113, to collect the information like the voice, the gesture, the facial expression, or the body motion of the user. Alternatively, the multi-dimensional sensing unit 110 may be implemented by using a plurality of independent units or modules, for example, one or more of modules such as a microphone module 111, a camera module 112, and a human body sensor module 113 that are separately disposed. The microphone module 111 may be disposed in the vehicle cockpit, and is configured to detect voice information of the user. There may be one or more microphone modules. The camera module 112 may be disposed on a side that is of a post A or a post B of the vehicle cockpit or a rearview mirror of the vehicle cockpit and that faces the user, or may be disposed in an area near a steering wheel or a central control console, or may be disposed at a position like a position above a rear display of a seat, and may be configured to collect a gesture motion, a facial expression, a body motion, or the like of the user, or may be configured to recognize a face of the user for user identity verification. The human body sensor module 113 may be configured to detect human body sign information of the user, for example, a body temperature and a heart rate. Correspondingly, the human body sensor module 113 may be specifically a sensor device that can implement body temperature and heart rate detection, for example, a temperature sensor or a heart rate sensor.

In this embodiment, the microphone module 111, the camera module 112, and the human body sensor module 113 may be pre-installed devices in the vehicle cockpit, or may be installed in the vehicle cockpit in a rear-mounted manner. The multi-dimensional sensing unit 110 collects the voice data, the gesture motion, the facial expression, or the body sign of the user by using the microphone module 111, the camera module 112, and the human body sensor module 113, and obtains a semantic feature through speech recognition and transcription of the voice data collected by the microphone module 111, obtains a gesture sequence feature through gesture recognition and transcription of the gesture motion collected by the camera module 112, obtains an emotion feature through facial expression recognition and transcription of the user facial expression collected by the camera module 112, and obtains a human body feature through heart rate signal processing and transcription of the human body feature collected by the human body sensor module 113. The semantic feature, the gesture sequence feature, the emotion feature, and the human body feature are sorted to generate a human body signal beam.

The intention recognition unit 120 may be an electronic device, and may be specifically a vehicle-mounted processing apparatus like an in-vehicle infotainment or a vehicle-mounted computer, or may be a chip or a processor in an in-vehicle infotainment or a vehicle-mounted computer, or may be a conventional chip processor like a central processing unit (Central Processing Unit, CPU) or a micro control unit (Micro Control Unit, MCU), or may be a terminal device like a mobile phone or a tablet. An intention recognition model may be preset in the intention recognition unit 120, or an intention recognition model preset in another component in the vehicle may be obtained, to recognize the received human body signal beam including the semantic feature, the gesture sequence feature, the emotion feature, and the human body feature, so as to recognize an experience intention of the user. The experience intention of the user may be specifically experience expected by the user in the vehicle. In this embodiment, during intention recognition, some features may be used as core features and other features may be used as auxiliary features based on weights of the features. For example, the semantic feature of the user may be used as the core feature, and is set with a higher weight, and the gesture sequence feature, emotion feature, and human body feature are used as auxiliary features, and are set with lower weights. The experience intention of the user is determined based on the features and the weights thereof. In this embodiment, the intention recognition model may be a mainstream model in the machine translation field. The intention recognition model is used to encode and decode the input human body signal beam, to obtain, through translation, an experience intention, corresponding to the human body signal beam, of the user. The experience intention of the user may specifically include a subjective feeling and an objective intention of the user. The subjective feeling mainly refers to a description of the user about self-feeling, for example, "I am very hot" and "I am very cold". The objective intention mainly refers to a user's operation intention, that is equivalent to the subjective feeling of the user, on a device or service. For example, the service operation intention equivalent to "I am very hot" is to "lower a body temperature", and the equivalent device operation intention is to "turn on an air conditioner", "decrease an air conditioner temperature", and "enable seat ventilation", or the service operation intention equivalent to "I am very cold" is to "increase a body temperature", and the equivalent device operation intention is to "turn off an air conditioner", "increase an air conditioner temperature", "disable seat ventilation", and the like.

The device management unit 130 may be sensors or controllers installed on the vehicle, and is mainly configured to detect a device status and an environment status of the vehicle. Specifically, the device management unit 130 may include an air conditioner controller 131, a seat controller 132, a speaker controller 133, a display controller 134, a light controller 135, a skylight controller 136, a window controller 137, a curtain controller 138, an environment sensor module 139, and the like. The controllers may be installed in a central control area of the vehicle cockpit, or may be installed in devices connected to the controllers, to execute control and status detection on the corresponding devices. The environment sensor module 139 may be a sensor device like a light sensor, a temperature sensor, a humidity sensor, or an air quality tester, and may detect an environment status inside and outside the vehicle. The device management unit 130 collects device status data and environment status data of the vehicle, and sorts out the data to generate a cockpit signal beam of the vehicle.

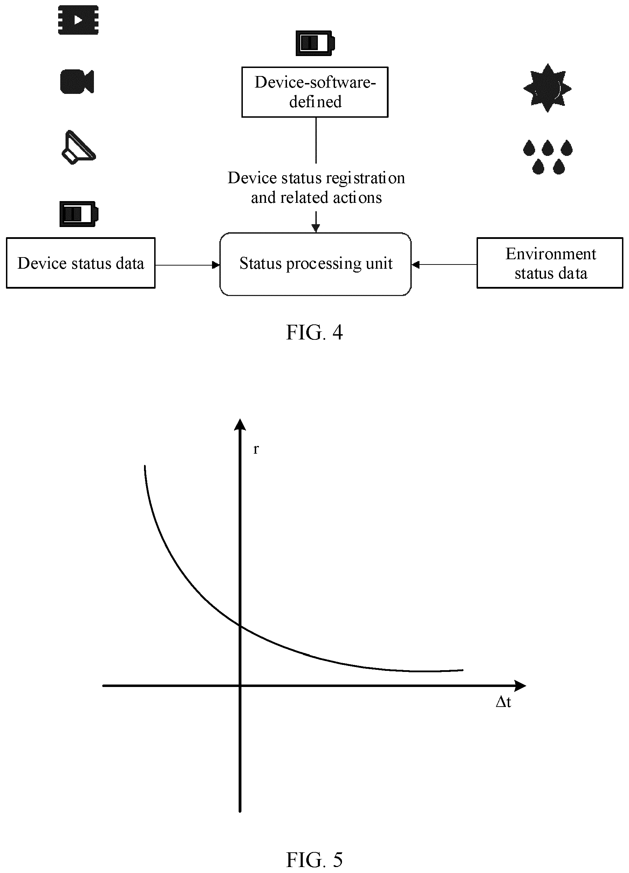

The status processing unit 140 may be a chip or a processor in an in-vehicle infotainment or a vehicle-mounted computer, or may be a conventional chip processor like a CPU or an MCU, or may be a software module having a processing function on a chip or a processor. The status processing unit 140 is configured to: store device status data and environment status data in the cockpit signal beam as corresponding feature parameters, and maintain and generate a status pool of the vehicle. Specifically, as shown in FIG. 4, when each device is installed on the vehicle, related software-defined registration needs to be performed. For example, the related software-defined registration may include registration of the device status data of the vehicle, to generate device status information of the vehicle, and include registration of a corresponding action required for changing a device status and action-related parameters, to generate a device action feature. In addition, the environment status data of the vehicle further needs to be registered, to generate the environment status information of the vehicle.

The system policy unit 150 may also be an electronic device, and may also be specifically a vehicle-mounted processing apparatus like an in-vehicle infotainment or a vehicle-mounted computer, or may be a chip or a processor in an in-vehicle infotainment or a vehicle-mounted computer, or may be a conventional chip processor like a CPU or an MCU, or may be a terminal device like a mobile phone or a tablet. The system policy unit 150 may be configured to determine, based on the experience intention of the user, and the device status information and the environment status information of the vehicle, a policy action used to control the vehicle. In this embodiment, the system policy unit 150 specifically includes a policy knowledge base 151, a policy sorting module 152, and a policy clarification module 153. The policy knowledge base 151, the policy sorting module 152, and the policy clarification module 153 may be specific hardware modules in the system policy unit 150, or may be software modules having a processing capability in the system policy unit 150.

The policy knowledge base 151 is configured to generate a recommended policy sequence based on the experience intention of the user, and the device status information and the environment status information of the vehicle. The policy sequence includes different policy actions used to execute different controls on the in-vehicle infotainment, and initial scores of the policy actions. The experience intention of the user is *Eₘ*, a current status of the vehicle is s (including a current device status *S_{dev}* and a current environment status *Sₑₙᵥ*), and a target status that is of the vehicle and that is expected based on the experience intention *Eₘ* of the user is s' (including an expected device status ${S}_{dev}^{′}$ and an expected environment status *Sₑₙᵥ*'). In this case, a trained Markov decision process (Markov Decision Process, MDP) model may be used to initially score the generated policy action *Actionᵢ.* Specifically, a status transfer probability of the vehicle transferring from the current status s to the target status s' when the policy action *Actionᵢ*/*a* is executed to control the vehicle may be used as an initial score *Score_{Actionᵢ}* of the policy action *Actionᵢ,* for example, a state transfer probability relationship in the MDP model may be as follows: $P \left(\left.s′\right|s,{Action}_{i}\right) = Pr \left(\left.{S}_{t}=s′\right|{S}_{t - 1}=s,{A}_{t - 1}={Action}_{i}\right) = {\sum }_{r ∈ R} p \left(\left.s′,r\right|s,{Action}_{i}\right)$ ${Score}_{{Action}_{i}} = P \left(\left.s′\right|s,{Action}_{i}\right)$

The state transfer probability relationship is mainly a function that reflects the current status s, the action *Actionᵢ,* and the target status s'. It can be learned from the state transfer probability relationship that the target state s' of the vehicle is related only to the current state s and the policy action *Actionᵢ* of the vehicle, and *r* is a reward element of the state transfer probability relationship. The initial score *Score_{Actionᵢ}* of the policy action *Actionᵢ* may be determined based on the obtained state transfer probability *P*(*s'*|*s, Actionᵢ*).

In this embodiment, in a training process of the MDP model, distribution of a reward r(s, *Actionᵢ*) mainly needs to be obtained, to train the MDP model. Specifically, the distribution of the reward r(s, *Actionᵢ*) may be obtained through modelling and fitting as follows.

The experience intention of the user is defined based on expression information of the user. In this embodiment, the expression information of the user may include a physiological feature and a psychological feature. The physiological feature mainly describes user's physiological perception of the outside. When an in-vehicle environment is beyond a comfort range of the user, the user expects to execute a proper policy action to adjust the in-vehicle environment to achieve the experience intention of the user. For example, as shown in the following table, a common physiological feature type is acoustic wave comfort, light comfort, temperature comfort, air comfort, or the like, and a human organ used to perceive an environment is an ear, an eye, a skin, a nose, or the like. The user perceives the in-vehicle environment by using the organ. For example, a description about perception of a sound by an ear is "noisy" or "quiet", a description about perception of light by an eye is "bright" or "dark", a description about perception of a temperature by skin is "hot" or "cold", and a description about perception of a smell by a nose is "turbid" or "clear".

| Physiological feature type | Organ | Expression description type |
|---|---|---|
| Acoustic wave comfort | Ear | Noisy or quiet |
| Light comfort | Eye | Bright or dark |
| Temperature comfort | Skin | Hot or cold |
| Air comfort | Nose | Turbid or clear |

The psychological feature is mainly a psychological state of the user, and is generally subjective experience of the user. For example, as shown in the following table, a common psychological feature type is an emotion like happiness, anger, sadness, fear, fatigue, and tension, and a corresponding experience description is "annoyed" and "calm", "angry" and "indignant", "miserable" and "painful", "fearful" and "horrible", "tired" and "weak", "excited", or the like.

| Psychological feature type | Expression description type |
|---|---|
| Happiness | Annoyed and calm |
| Anger | Angry and indignant |
| Sadness | Miserable and painful |
| Fear | Fearful and horrible |
| Fatigue | Tired and weak |
| Tension | Excited |
| ... | ... |

A corresponding strongly related policy action may be defined based on the physiological feature and the psychological feature of the user. For example, when the user expresses "I am very hot" by using a voice, a corresponding expression description is "hot", and a corresponding physiological feature type is "temperature comfort". In this case, a policy action of "reducing an air conditioner temperature" may be preliminarily considered as an equivalent experience intention of "I am very hot", and a policy action, adjacent to the policy action of "reducing an air conditioner temperature", of "enabling seat ventilation", "increasing an air conditioner air volume", or the like may be considered as a related policy action of the equivalent experience intention of "I am very hot" expressed by the user. Based on the plurality of related policy actions, correlation between each policy action and the experience intention may be scored. For example, when the policy action *Actionᵢ* is closer to time of "reducing an air conditioner temperature", it may be considered that a score of correlation between the policy action *Actionᵢ* and "temperature comfort" is higher, and an in-vehicle environment status after a period of time may be considered as a target status *s'* corresponding to the experience intention of the user. Specifically, as shown in FIG. 5, a reward r of the policy action *Actionᵢ* is related to a negative index of distribution of a time interval Δt, that is, $r = {e}^{- \left|{t}_{action _ i}-{t}_{Action _ i + 1}\right|}$

It can be learned from the foregoing formula that a longer time interval indicates a lower reward r of the policy action. In this manner, correlation between the foregoing plurality of policy actions and the experience intention of the user may be obtained. The MDP model may be trained by obtaining correlation between a reward of each policy action and the experience intention, so that when the experience intention of the user is obtained, a plurality of policy actions related to the experience intention of the user are quickly screened.

A transfer probability of adjusting from the current status *s* (including the current device status *S_{dev}* and the current environment status *Sₑₙᵥ*) to the target status *s'* (including the expected device status *S_{dev}'* and the expected environment status *Sₑₙᵥ*') by using a screened policy action *a* in the current experience intention *Eₘ* may be obtained based on the plurality of policy actions that are screened, that is, ${Score}_{{Action}_{i}} \left({S}_{env}, {S}_{dev}, {E}_{m}\right) = P \left(\left.s′\right|s,a\right)$

The policy sorting module 152 is configured to perform weighted scoring and sorting on the plurality of generated policy actions based on policy preference information of the user. The policy preference information of the user may be reflected by a frequency of using a policy action by the user. To smooth impact of the policy preference information of the user and the initial score on a generated final policy action, weighted calculation may be performed on the initial score of each policy action by setting a weight. A calculation manner is as follows: $ln {Score}_{{Action}_{i}}^{′} = {w}_{1} ∗ ln {Preference}_{u _ i} + {w}_{2} ∗ ln {Score}_{{Action}_{i}} \left({S}_{env}, {S}_{dev}, {E}_{m}\right)$

Herein, *w*₁ is a weight of policy preference information *Preference_{u_i}* of the user, *w*₂ is a weight of an initial score *Score_{Actionᵢ}*(*Sₑₙᵥ, S_{dev}, Eₘ*) (namely, the transfer probability of adjusting from the current status *s* to the target status s' by using the policy action *Actionᵢ*) of the policy action *Actionᵢ* generated by the policy knowledge base 151. Weighted scoring may be performed on a plurality of policy actions in a generated policy sequence by setting weights, and the policy actions are sorted based on weighted scores. In addition, one or more policy actions that ranks/rank ahead may be considered as a policy action/policy actions that most meets/meet the current experience intention, the current device status, and the current environment status.

The policy clarification module 153 may be configured to perform policy clarification on one or more policy actions that rank ahead to select a final policy action, thereby updating a scoring model and recording policy preference information. For example, a difference between weighted scores of two policy actions *Actionᵢ and Actionⱼ* that rank ahead may be calculated, $Δ = \left|{Score}_{i}-{Score}_{j}\right| \left({Score}_{i}>{Score}_{j}\right)$

In addition, a policy action with a highest score is selected or clarification is initiated based on the calculated difference Δ and a specified threshold *δ*. The specified threshold *δ* may be manually set or modified based on a user preference for a policy clarification action. For example, when the user expects more that selection of a policy action in the human-machine interaction process is determined by an individual, the user may set the threshold *δ* to a larger value. When a difference between weighted scores of two policy actions is calculated, and the obtained difference Δ is less than the threshold *δ*, the two policy actions may be provided to the user for clarification. On the contrary, when the user expects more that selection of a policy action in the human-machine interaction process can be automatically implemented, the threshold *δ* may be set to a small value. When a difference between weighted scores of two policy actions is calculated, and the obtained difference Δ is greater than the threshold *δ*, a policy action with a higher score may be automatically selected as a final policy action. ${Action}_{final} = \left\{\begin{matrix}execute \left({Action}_{i}\right) , Δ > δ \\ request \left({Action}_{i}, {Action}_{j}\right) , Δ \leq δ\end{matrix}\right.$

When the difference Δ is greater than the threshold *δ*, clarification does not need to be initiated, and the policy action *Actionᵢ* with a higher score may be directly selected as a final policy action. When the difference Δ is less than the threshold *δ*, clarification needs to be initiated, and the two policy actions *Actionᵢ* and *Actionⱼ* are provided to the user for clarification. In addition, the final policy action is selected based on a user clarification result, and the policy preference information of the user is updated based on the user clarification result.

The difference calculation is merely an implementation of this embodiment. In some embodiments, when policy clarification is performed on a plurality of policy actions that rank ahead, a variance calculation manner may be further used, and policy clarification is performed based on a variance calculation result, to select a final policy action.

In some embodiments, the policy clarification module 153 may further directly select a plurality of policy actions that rank ahead in a policy sequence, and combine the plurality of policy actions to generate a final policy action. Specifically, a specified score may be used as a threshold for selecting a policy action. The specified score may be set manually, or may be determined based on a weighted score of a policy action frequently selected by the user. For example, the weighted score of the policy action frequently selected by the user is used as the specified score for screening a policy action. By screening a plurality of policy actions whose weighted scores exceed the specified score in the policy sequence, a plurality of policy actions with same or similar execution effect may be combined to generate the final policy action, so as to implement better policy recommendation and execution effect.

In some embodiments, when a final policy action is selected based on a user clarification result, correlation between any two or more of the information expressed by the user, the experience intention of the user, the plurality of recommended policy actions, and the policy preference information of the user may be further updated based on the policy action selected by the user, to update a policy recommendation model in the policy knowledge base 151 and a policy ranking model of the policy sorting module 152, and form a corpus pair by using information that is expressed by the user and that is input into the intention recognition unit 120 and the final policy action, so as to train and optimize an intention recognition algorithm or an intention recognition model in the intention recognition unit 120.

The action execution unit 160 may be an electronic control unit (Electronic Control Unit, ECU) on the vehicle, or may be some components of the electronic control unit, such as an interface circuit or an executor. The action execution unit 160 is configured to execute a corresponding policy action to control the vehicle based on a clarification status bit of the policy clarification module 153. When the clarification status bit is *request*, the action execution unit queries a user preference for *Actionᵢ* and *Actionⱼ* and executes the final policy action based on feedback of the user. When the clarification status bit is *execute*, the action execution unit directly executes a corresponding policy action or executes the policy action generated by the preceding combination. The action execution unit 160 may further update the device status and the environment status of the vehicle in real time based on execution information of the policy action, until the experience intention of the user is met.

The multi-dimensional sensing unit 110, the intention recognition unit 120, the device management unit 130, the status processing unit 140, the system policy unit 150, and the action execution unit 160 may perform data or instruction communication in a wired communication (for example, an interface circuit) or wireless communication (for example, Bluetooth or Wi-Fi) manner separately. According to the foregoing structure, the vehicle 100 in this embodiment may collect the information expressed by the user, and perform intention recognition based on a preset intention recognition model or an intention recognition algorithm, to obtain a user experience intention corresponding to the information expressed by the user, generate a plurality of recommended policy actions based on the recognized user experience intention and status information of the vehicle, adjust scores of the plurality of recommended policy actions based on policy preference information of the user, and determine a policy action based on adjusted scores, to control an in-vehicle infotainment. The vehicle 100 in this embodiment is applicable to different user expression habits, and can dynamically recommend a proper policy action to the user, to meet a user's expectation on human-machine interaction and improve user experience evaluation.

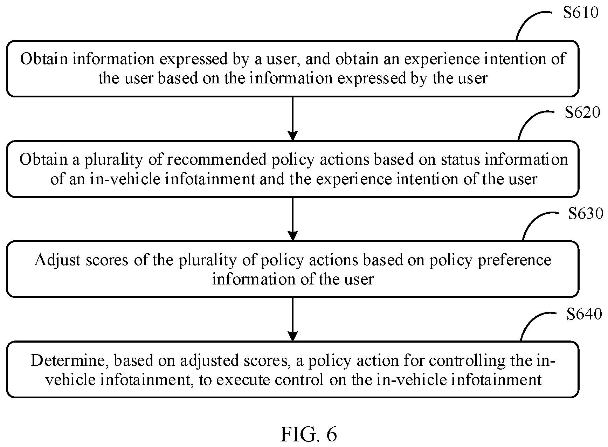

FIG. 6 is a flowchart of a human-machine interaction method according to an embodiment of this invention. The human-machine interaction method may be performed by a human-machine interaction apparatus or some components in a human-machine interaction apparatus, such as a vehicle, a vehicle interaction system, or a processor. The processor may be a processor of the human-machine interaction apparatus, or may be a processor of a vehicle-mounted processing apparatus like an in-vehicle infotainment or a vehicle-mounted computer. Specifically, information expressed by a user may be obtained, and intention recognition is performed based on a preset intention recognition model or an intention recognition algorithm, to obtain an experience intention of the user; and a plurality of recommended policy actions are generated based on the experience intention of the user and status information of an in-vehicle infotainment; and a final policy action is determined based on the policy preference information of the user, to control the in-vehicle infotainment. As shown in FIG. 6, the human-machine interaction method includes the following steps.

S610: Obtain the information expressed by the user, and obtain the experience intention of the user based on the information expressed by the user.

In this embodiment, the information expressed by the user may be collected by using the microphone module 111, the camera module 112, the human body sensor module 113, and the like in FIG. 3. The microphone module 111 is configured to: detect a voice of the user, and obtain a semantic feature through speech recognition and transcription of voice data collected by the microphone module 111. The camera module 112 is configured to: collect a gesture motion, a facial expression, a body motion, or the like of the user, obtain a gesture sequence feature through gesture recognition and transcription of the gesture motion, collected by the camera module 112, of the user, and obtain an emotion feature through expression recognition and transcription of the facial expression, collected by the camera module 112, of the user. The human body sensor module 113 is configured to: detect human body sign information of the user, for example, a body temperature and a heart rate, and obtain a human body sign feature through heart rate signal processing and transcription of a human body sign collected by the human body sensor module 113. The semantic feature, the gesture sequence feature, the emotion feature, and the human body feature are sorted to generate the information expressed by the user. The intention recognition unit 120 may perform intention recognition on the information expressed by the user by using the intention recognition model or the intention recognition algorithm, to recognize the experience intention of the user. The experience intention of the user may be specifically experience expected by the user in a vehicle.

S620: Obtain the plurality of recommended policy actions based on the status information of the in-vehicle infotainment and the experience intention of the user.

The status information of the in-vehicle infotainment specifically includes device status information and environment status information of the in-vehicle infotainment. A recommended policy sequence may be generated by inputting the experience intention of the user, the device status information, and the environment status information into the policy knowledge base 151. The policy sequence includes a plurality of policy actions and initial scores of the policy actions. The initial score of each policy action may be a transfer probability of adjusting from a current device status and a current environment status to a target status corresponding to the experience intention of the user when the policy action is used to control the vehicle.

S630: Adjust the scores of the plurality of policy actions based on the policy preference information of the user.

The policy preference information of the user may be reflected by a frequency of using a policy action by the user. To smooth impact of the policy preference information of the user and the initial score of each policy action on the generated final policy action, weighted calculation may be performed on the initial score of each policy action by setting a weight, and the plurality of policy actions are sorted based on the weighted scores obtained through calculation. The one or more policy actions that ranks/rank ahead may be considered as a policy action/policy actions that most meets/meet the current experience intention of the user, the current device status, and the current environment status.

S640: Determine, based on adjusted scores, the policy action for controlling the in-vehicle infotainment, to execute control on the in-vehicle infotainment.

The policy action for controlling the in-vehicle infotainment may be determined from the plurality of sorted policy actions based on the adjusted scores. Specifically, whether to initiate clarification by the user may be determined based on weighted scores of several policy actions that rank ahead. For example, a difference calculation may be performed on weighted scores of at least two policy actions that rank ahead, and a policy action with a highest score is selected based on a result of the difference calculation and a specified threshold, to control the in-vehicle infotainment or initiate a clarification procedure. When the difference is greater than the threshold, clarification does not need to be initiated, and the policy action with the highest score may be directly selected as the final policy action to control the in-vehicle infotainment. When the difference is less than the threshold, clarification needs to be initiated, the two policy actions are provided to the user to select for clarification, selection information of the user is received, and a policy action that meets a user preference is determined to control the in-vehicle infotainment.

In some embodiments, correlation between any two or more of the information expressed by the user, the experience intention of the user, the plurality of recommended policy actions, and the policy preference information of the user may be further updated based on the policy action selected by the user, to perform optimization training on a policy recommendation model in the policy knowledge base 151 and a policy ranking model of the policy sorting module 152, and form a corpus pair by using information that is expressed by the user and that is input into the intention recognition unit 120 and the final policy action, so as to train and optimize an intention recognition algorithm or an intention recognition model in the intention recognition unit 120.

In some embodiments, the plurality of policy actions that rank ahead in a policy sequence may alternatively be selected directly, and are combined to generate a final policy action. For example, a specified score may be used as a threshold for selecting a policy action. By screening a plurality of policy actions whose weighted scores exceed the specified score in the policy sequence, a plurality of policy actions with same or similar execution effect may be combined to generate the final policy action, so as to implement better policy recommendation and execution effect.

In some embodiments, before step S610 is performed in this method, identity information of the user may be obtained by using the microphone module 111 or the camera module 112, and a prestored user intention preference and prestored policy preference information of the user are obtained based on the identity information of the user, to recognize the experience intention of the user by using the user intention preference, and adjust scores of the plurality of generated policy actions by using the policy preference information of the user, so that the final policy action better meets the user's use habit.

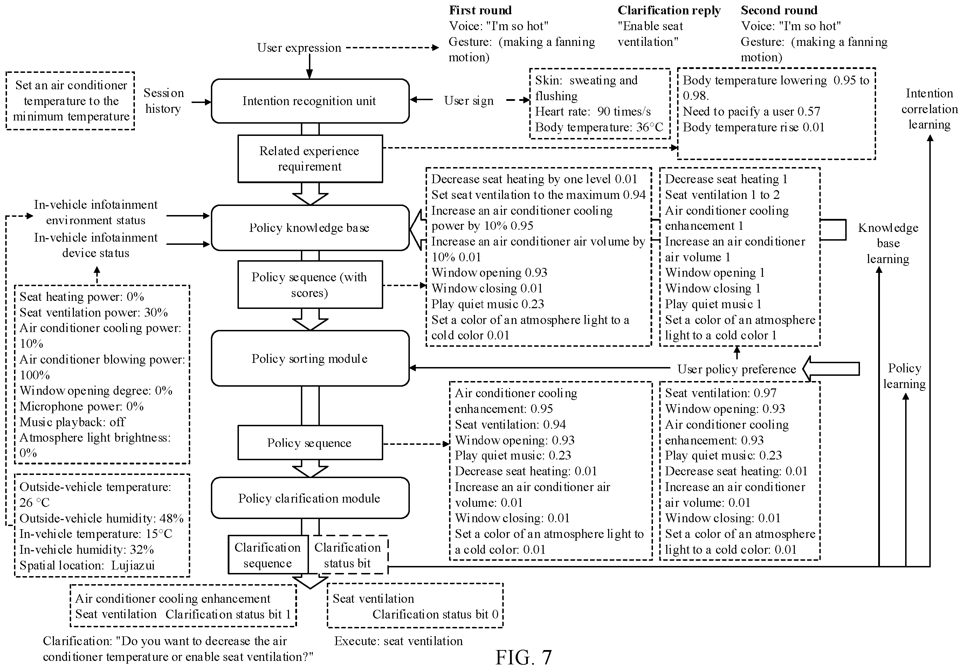

FIG. 7 is a schematic diagram of a policy generation and clarification procedure according to an embodiment of this invention. Refer to FIG. 7. A specific execution process of the foregoing human-machine interaction method is systematically described. As shown in FIG. 7, the policy generation and clarification procedure includes the following steps.

Based on user's expression information, an intention recognition unit recognizes a user's intention. For example, when a first round of expression of a user is "I am so hot" by using a voice, an experience intention, for example, a need to lower a body temperature and a need to pacify the user, of the user is recognized by using an intention recognition model prestored in the intention recognition unit based on a gesture motion of "making a fanning motion", and body features such as sweating, flushing, a heart rate rise, and a body temperature rise of the user.

A recommended policy sequence is generated by using a policy knowledge base based on a current device status and a current environment status of a vehicle and the experience intention of the user, where the policy sequence includes a plurality of policy actions and an initial score of each policy action, and the policy sequence may specifically include: different policy actions used for different controls on an in-vehicle infotainment, such as decreasing seat heating, increasing seat ventilation, enhancing air conditioner cooling, increasing an air conditioner air volume, opening a vehicle window, closing a vehicle window, playing quiet music, and setting a color of an atmosphere light to a cold color. The initial score of each policy action is generated based on correlation between the policy action and the experience intention of the user. For example, the initial score of each policy action in the policy sequence is as follows:

The initial score of the policy action of deceasing seat heating is 0.01, the initial score of the policy action of increasing seat ventilation is 0.94, the initial score of the policy action of enhancing air conditioner cooling is 0.95, the initial score of the policy action of increasing an air conditioner air volume is 0.01, the initial score of the policy action of opening a vehicle window is 0.93, the initial score of the policy action of closing a vehicle window is 0.01, the initial score of the policy action of playing quiet music is 0.23, and the initial score of the policy action of setting a color of an atmosphere light to a cold color is 0.01.

Based on policy preference information of the user and the initial score of each policy action, a policy sorting module performs weighted calculation on each policy action in the policy sequence generated by the policy knowledge base, and sorts the policy actions based on weighted scores. In the weighted calculation, the policy preference information of the user may be specifically a frequency of using a policy action by the user. A higher frequency of using a policy action indicates a higher preference degree of the user to the policy action. A weight is set for the policy preference information that is of the user and that corresponds to each policy action, and the initial score of each policy action, weighted calculation is performed again on the initial score of the policy action based on the set weight to generate a weighted score of each policy action, and the plurality of policy actions in the policy sequence may be sorted based on the weighted scores. For example, the weighted scores and the sorted policy actions are as follows:

The weighted score of the sorted policy action of increasing seat ventilation is 0.97, the weighted score of the sorted policy action of opening a vehicle window is 0.93, the weighted score of the sorted policy action of enhancing air conditioner cooling is 0.93, the weighted score of the sorted policy action of playing quiet music is 0.23, the weighted score of the sorted policy action of decreasing seat heating is 0.01, the weighted score of the sorted policy action of increasing an air conditioner air volume is 0.01, the weighted score of the sorted policy action of closing a vehicle window is 0.01, and the weighted score of the sorted policy action of setting a color of an atmosphere light to a cold color is 0.01.

Policy clarification may be initiated by using a policy clarification module based on weighted scores of at least two policy sequences which rank ahead. In this embodiment, when the at least two policy actions which rank ahead are selected, two policy actions which rank ahead in the policy sequence and have the same or similar control effect are generally selected. For example, the policy actions of "increasing seat ventilation" and " enhancing air conditioner cooling" which rank ahead may be selected by the user for clarification. A difference calculation (0.97-0.93=0.04) is performed on weighted scores of the policy actions of "increasing seat ventilation" and " enhancing air conditioner cooling", and a policy action with a higher score is directly selected or clarification is initiated for the two policy actions based on the difference calculation result (0.04) and a specified threshold. For example, when the specified threshold is 0.03, the difference (0.04) is greater than the threshold (0.03), so that clarification does not need to be initiated, and the policy action of "increasing seat ventilation" with a higher weighted score may be directly selected from the two policy actions as a final policy action. Alternatively, when the specified threshold is 0.05, the difference (0.04) is less than the threshold (0.05), so that clarification needs to be initiated, the two policy actions of "increasing seat ventilation" and "enhancing air conditioner cooling" are provided to the user for clarification, a final policy action is selected based on a user's clarification result, for example, by asking the user "Do you want to decrease an air conditioner temperature or enable seat ventilation?", and a final policy action of "enhancing air conditioner cooling" is selected to control the in-vehicle infotainment based on a user's selection (for example, the user selects to decrease an air conditioner temperature).

In some embodiments, the policy preference information of the user and an initial score of the policy action of " enhancing air conditioner cooling" in the policy knowledge base may be updated based on the policy action of "enhancing air conditioner cooling" selected by the user. In addition, information expressed by the user and the policy action of " enhancing air conditioner cooling" selected by the user may be used to form a sample to train the intention recognition unit, so as to improve correlation between intention recognition, policy recommendation, the policy preference information of the user, and user expression, so that the generated policy action is more accurate.

In some embodiments, an action execution unit may further execute the final policy action, and update the device status and the environment status of the in-vehicle infotainment based on execution information. Because an execution objective of the final policy action is to adjust the current device status or the current environment status to a target status corresponding to the experience intention of the user, when the final policy action cannot be continued or fails to be executed, in this embodiment, the final policy action generated previously may be used as a session history, and an alternative policy action is generated based on information expressed by the user in the second round, where the alternative policy action has the same or similar execution effect as the final policy action. For example, when the temperature of the air conditioner has been set to the minimum temperature based on the policy action of " enhancing air conditioner cooling" selected by the user, the user still expresses "I am very hot" by using a voice, with a gesture motion of "making a fanning motion". In this case, the policy action of "setting an air conditioner temperature to the minimum temperature" may be used as a session history, and a second round of intention recognition, policy recommendation, and policy clarification are performed based on a second round of information expressed by the user, to select an alternative policy action. In this case, the alternative policy action has same or similar control effect as the policy action in the first round. For example, the policy action selected in the second round may be "seat ventilation", so as to implement all-scenario policy recommendation focusing on user experience.

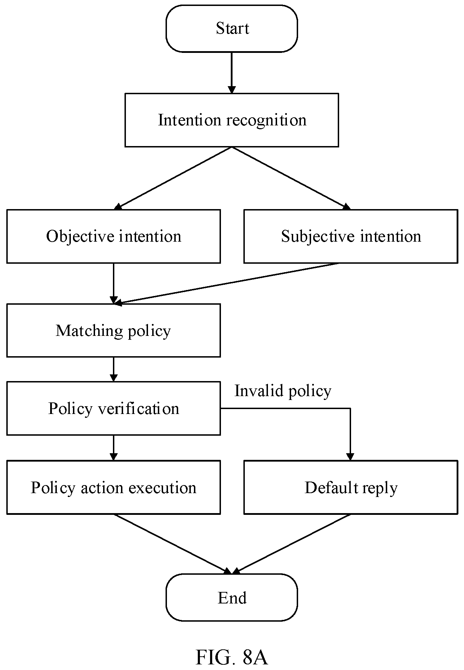

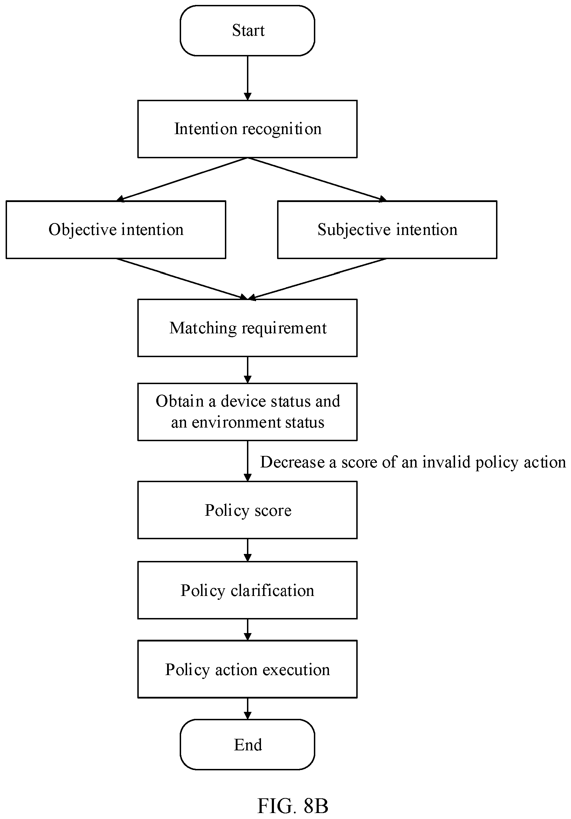

The following compares a policy generation procedure of a general-purpose platform with the policy generation and clarification procedure in embodiments of this invention based on FIG. 8A and FIG. 8B, to reflect beneficial effects of embodiments of this invention.

FIG. 8A is a schematic diagram of a policy generation procedure of a general-purpose platform. On the general-purpose platform, an intention expressed by the user can be recognized only when a user needs to express based on a preconfigured dialogue policy, and expressed content is accurate. The intention recognition may be performed to recognize an objective intention and a subjective feeling expressed by the user. The objective intention is a main interaction manner of the general-purpose platform, and the subjective feeling is an auxiliary manner. Specifically, the objective intention may be an operation intention expressed by the user for a vehicle device. For example, it is assumed that a semantic meaning expressed by the user is a correct operation command of "turning on an air conditioner" of the vehicle device, a corresponding matching policy is to turn on the air conditioner. However, the user needs to express the operation command correctly. If the user does not express the operation command correctly, intention recognition may not be performed or a matching policy may fail. The subjective feeling may be a description of the user about self-feeling. For example, a semantic meaning expressed by the user is "feeling very hot" that is preconfigured, it is assumed that an equivalent objective intention corresponding to the "feeling very hot" is "turning on an air conditioner", a corresponding matching policy is to turn on the air conditioner. It is assumed that a semantic meaning expressed by the user is not preconfigured with an equivalent objective intention, intention recognition may not be performed or the matching policy may fail. For the generated policy action, policy verification may be performed to verify whether the generated policy action is invalid. When the generated policy action is not invalid, the generated policy action may be executed. When the generated policy action is invalid, a configured default policy is triggered, to feed back that the generated policy action cannot be executed, and no alternative policy action can be recommended. In this case, the interaction procedure cannot meet the experience intention of the user.

As shown in FIG. 8A, in a policy generation scenario of the general-purpose platform, a user intention and a policy action need to be configured in advance. Such configuration is usually statically bound, and one user intention usually corresponds to only one policy action. Therefore, other feasible policy actions are easily missed, and there is no all-scenario policy recommendation focusing on user experience. In addition, the user further needs to learn a specific expression manner, to trigger a specific pre-configured scenario. When the expression manner of the user is incorrect or is relatively personalized, the specific pre-configured scenario cannot be directly triggered, and consequently, user experience is directly reduced.

Compared with that in the policy generation procedure of the general-purpose platform, in the policy generation and clarification procedure of this embodiment, as shown in a schematic diagram of a policy generation and clarification procedure according to an embodiment of this invention in FIG. 8B, a user intention and a policy action do not need to be specifically preconfigured, and only a conventional expression feature of the user and status information of a related device need to be registered, and then intention recognition is performed on information expressed by the user by using an intention recognition model or an intention recognition algorithm, to recognize a subjective feeling and an objective intention of the user. In this embodiment of this invention, a more intelligent intention recognition model or intention recognition algorithm is used. The user may directly describe self-feeling or requirement experience based on an expression habit of the user, or may quickly recognize the experience intention of the user, and input the experience intention of the user and the obtained device status and environment status features into a policy knowledge base for policy generation and policy recommendation, so that a plurality of policy actions related to the experience intention of the user can be generated, and each policy action is scored and sorted. In addition, policy clarification may be further performed when there are a plurality of policy actions for selection, the plurality of policy actions are provided for the user to select, and a final policy action is executed.

As shown in FIG. 8B, in this embodiment of this invention, policy recommendation based on the subjective feeling and objective intention of the user may be implemented, and an expression manner of the user is not specifically limited. The more intelligent intention recognition model or intention recognition algorithm is provided. The user can directly describe self-feeling or requirement experience, and may make an in-vehicle infotainment provide a proper feedback without knowing device operation knowledge. This reduces a user experience threshold. In addition, the generated policy action may be dynamically adjusted based on changes of the device status and environment status. For an invalid policy action, a score of the invalid policy action may be reduced, and a policy action with same experience may be recommended in a timely manner, to improve user experience evaluation. In addition, in this embodiment, policy preference information of the user and a matching relationship between the user expression and the policy action may be also dynamically updated, to adapt to the expression habit of the user and implement dynamic recognition of the user habit.

In some variant embodiments of the human-machine interaction method provided in embodiments of this invention, another embodiment of this invention relates to a method for interaction between a user and a smart home device.

With gradual popularization of smart appliances, a plurality of smart home devices provide a human-machine interaction function, and perform related controls on the smart home devices based on policy actions generated through human-machine interaction. For example, a user may control the smart home device by using a voice, a gesture, a facial expression, a body motion, or the like. Therefore, this embodiment provides a method for interaction between a user and a smart home device that can perform effective human-machine interaction.

A microphone module, a camera module, a human body sensor module, and the like that can interact with the user are generally installed in some existing smart home devices. For example, a microphone module of a smart speaker may be configured to obtain voice information expressed by the user, and may also be used as a control medium to perform local area network networking or Bluetooth networking with another smart home device, to implement control on the another smart home device, for example, a device like an air conditioner, a television, a water heater, and a curtain motor by performing intention recognition on the obtained voice information, generating a policy action and sending the generated policy action to a corresponding smart home device. Alternatively, a home camera may be configured to obtain image information like a gesture motion, a facial expression, and a body motion expressed by the user, to implement control on another smart home device by performing intention recognition on the obtained image information, and generating a policy action and sending the generated policy action to a corresponding smart home device. For example, the home camera recognizes a subjective feeling of the user that the user currently feels hot and needs to lower a body temperature, and an objective intention that is manually preset and that is equivalent to the subjective feeling for controlling the smart home device based on a "fanning" action expressed by the user, or a body temperature rise, face sweating and the like that are recognized by the human body sensor, to generate a policy action like turning on an air conditioner and closing a curtain, and send the policy action to a corresponding air conditioner and curtain motor for execution, so as to meet the experience intention of the user.

In the descriptions of the foregoing embodiments, an example in which a vehicle or a smart home device is used as an object device is used for description. However, the human-machine interaction technology in this invention may be further applied to a plurality of other scenarios in which interaction control is performed by using a voice, a gesture motion, a body motion, or the like, or a scenario in which identity authentication is required.

In conclusion, in the human-machine interaction method provided in embodiments of this invention, the policy recommendation based on the subjective feeling and objective intention of the user may be implemented, and the generated policy action may be dynamically adjusted based on the change of the device status and the environment status. In addition, when a plurality of adapted policy actions appear, clarification by the user may be initiated, and an optimal policy action that meets a current effective experience intention is generated based on a selection of the user, or a plurality of policy actions that meet an effective experience intention of the user are selected for combination. The policy knowledge base in this invention may be designed based on the experience intention of the user, to ensure that the generated policy action matches the experience intention of the user. Based on the policy knowledge base, the user does not need to know complex device operation knowledge, and only needs to intuitively describe self-feeling or experience intention, to perform intention recognition and generate an appropriate policy action. This reduces a user usage threshold. In addition, in this invention, a machine learning algorithm may be used to perform learning and optimization based on a user's expression habit, a policy clarification result, and the like, and dynamically update the policy preference information of the user, thereby increasing a hit rate of the generated policy action and reducing unnecessary interaction rounds of the user.

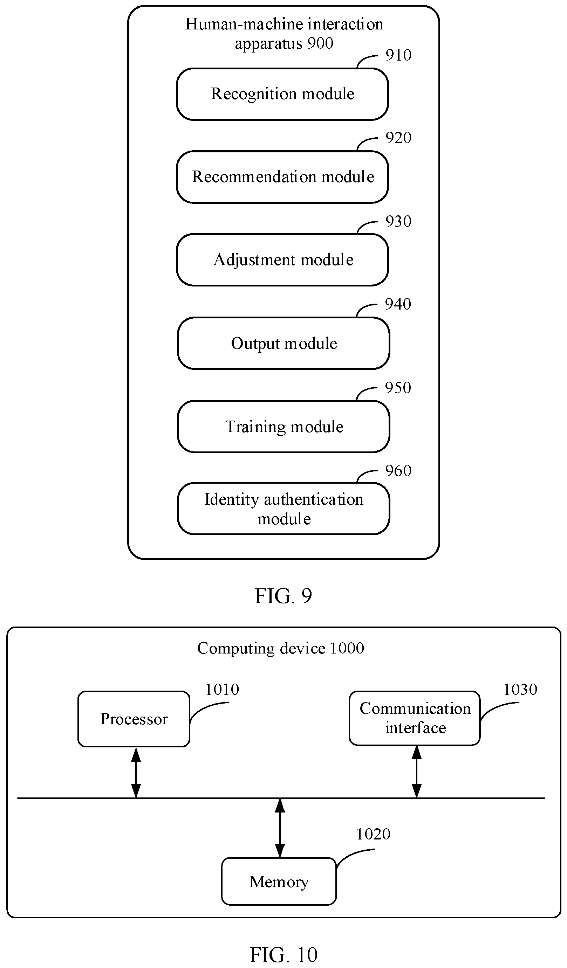

FIG. 9 is a diagram of an architecture of a human-machine interaction apparatus according to an embodiment of this invention. The human-machine interaction apparatus may be configured to implement the optional embodiments of the foregoing human-machine interaction method. The human-machine interaction apparatus may be a vehicle-mounted apparatus or a terminal, for example, may be a vehicle-mounted processing apparatus like a vehicle, an in-vehicle infotainment on a vehicle, or a vehicle-mounted computer, or may be a terminal device like a mobile phone or a tablet. Alternatively, the human-machine interaction apparatus may be a chip or a chip system inside a terminal, for example, may be a chip or a processor in an in-vehicle infotainment or a vehicle-mounted computer, or may be a chip or a processor in a terminal device like a mobile phone or a tablet, or may be a conventional chip processor like a CPU or an MCU. Alternatively, the human-machine interaction apparatus may be a software and hardware system inside a terminal, for example, may be a system having software and hardware, like a human-machine interaction interface in a vehicle cockpit or an in-vehicle infotainment. As shown in FIG. 9, the human-machine interaction apparatus includes a recognition module 910, a recommendation module 920, an adjustment module 930, and an output module 940.

The recognition module 910 is configured to perform step S610 in the foregoing human-machine interaction method and the example in the step S610. For example, an intention recognition model may be preset in the recognition module 910, or an intention recognition model preset in another component in a vehicle may be obtained, to recognize, by using the intention recognition module, information expressed by a user, to obtain an experience intention of the user. The recommendation module 920 is configured to perform step S620 in the foregoing human-machine interaction method and the example in the step S620. For example, the recommendation module 920 may obtain, by using a policy knowledge base, a plurality of recommended policy actions based on status information of an in-vehicle infotainment and an experience intention of the user. The adjustment module 930 is configured to perform step S630 in the foregoing human-machine interaction method and the example in step S630. For example, the adjustment module 930 may be configured to adjust scores of the plurality of policy actions based on the policy preference information of the user. The output module 940 is configured to perform step S640 in the foregoing human-machine interaction method and the example in step S640. For example, the output module 940 may determine, based on adjusted scores, a policy action for controlling the in-vehicle infotainment, to implement control on the in-vehicle infotainment. For details, refer to the detailed description in the method embodiment. Details are not described herein again.

In some embodiments, the human-machine interaction apparatus may further have a training module 950. The training module 950 may implement a part related to training optimization in the foregoing human-machine interaction method. For example, correlation between any two or more of the information expressed by the user, the experience intention of the user, the plurality of recommended policy actions, and the policy preference information of the user may be updated based on selection information of the user, so as to implement optimization training on an intention recognition algorithm or a model like an intention recognition model, a policy recommendation model, or a policy ranking model, so that a user's personal preference is better met, and accuracy of human-machine interaction is improved.

In some embodiments, the human-machine interaction apparatus may further have an identity authentication module 960. The identity authentication module 960 may implement a part related to identity authentication in the foregoing human-machine interaction method. For example, identity information of the user may be obtained by using the identity authentication module 960, and policy preference information or intention preference information of the user may be obtained based on the identity information of the user, so that the human-machine interaction apparatus better meets a customized requirement of the user.

The human-machine interaction apparatus provided in this embodiment may collect the information expressed by the user, and perform intention recognition based on a preset intention recognition model or an intention recognition algorithm, to obtain a user experience intention corresponding to the information expressed by the user, generate a plurality of recommended policy actions based on the recognized user experience intention and status information of an in-vehicle infotainment, adjust scores of the plurality of recommended policy actions based on the policy preference information of the user, and determine a policy action based on adjusted scores, to control the in-vehicle infotainment. The human-machine interaction apparatus is applicable to different user expression habits and different in-vehicle infotainment statuses, and can dynamically recommend a proper policy action to the user, to meet a user's expectation on human-machine interaction and improve user experience evaluation.

It should be further understood that the human-machine interaction apparatus in this embodiment of this invention may be implemented by software, for example, a computer program or instructions having the foregoing functions, and the corresponding computer program or the corresponding instructions may be stored in a memory inside a terminal. A processor reads the corresponding computer program or the corresponding instructions in the memory to implement the foregoing functions. Alternatively, the human-machine interaction apparatus in this embodiment of this invention may be implemented by hardware. For example, the recognition module 910 may be implemented by an intention recognition unit on the vehicle, for example, may be a vehicle-mounted processing apparatus like an in-vehicle infotainment or a vehicle-mounted computer, or may be a part of a component like a chip or a processor in an in-vehicle infotainment or a vehicle-mounted computer. The recommendation module 920, the adjustment module 930, and the output module 940 may be implemented by a system policy unit on the vehicle. For example, the recommendation module 920 may be implemented by a policy knowledge base in the system policy unit, the adjustment module 930 may be implemented by a policy sorting module in the system policy unit, and the output module 940 may be implemented by a policy clarification module in the system policy unit. In this embodiment, the system policy unit may be specifically a vehicle-mounted processing apparatus like an in-vehicle infotainment or a vehicle-mounted computer, or may be a chip or a processor in an in-vehicle infotainment or an in-vehicle computer, or may be a conventional chip processor like a CPU or an MCU. The training module 950 may be implemented by a system policy unit on the vehicle, for example, may be implemented by one or more of the policy knowledge base, the policy sorting module, and the policy clarification module in the system policy unit, or may be implemented by an interface circuit between the policy knowledge base, the policy sorting module, and the policy clarification module. The identity authentication module 960 may be implemented by a multi-dimensional sensing unit on the vehicle, for example, may be implemented by one or more of a camera module, a microphone module, or a human body sensor module, to implement user identity authentication in a manner of facial recognition, speech recognition, or body sign recognition. Alternatively, the human-machine interaction apparatus in this embodiment of this invention may be implemented by a combination of a processor and a software module.

It should be understood that for processing details of the apparatus or the module in this embodiment of this invention, refer to related descriptions of the embodiments shown in FIG. 2 to FIG. 8B and related extended embodiments. Details are not described again in this embodiment of this invention.

In addition, an embodiment of this invention further provides a vehicle having the foregoing human-machine interaction apparatus. The vehicle may be a household car, a motor truck, or the like, or may be a special vehicle like an ambulance, a firefighting vehicle, a police vehicle, or an engineering rescue vehicle. The modules and the apparatuses in the foregoing human-machine interaction apparatus may be disposed in a vehicle system in a pre-installation or post-installation manner. The modules may exchange data by relying on a bus or an interface circuit of a vehicle. Alternatively, with development of wireless technologies, the modules may exchange data in a wireless communication manner, to eliminate inconvenience caused by cabling. In addition, the human-machine interaction apparatus in this embodiment may further be combined with apparatuses such as the in-vehicle infotainment, the vehicle-mounted computer, and an ECU of the vehicle, and is installed on the vehicle in a form of the vehicle-mounted device, so as to implement better human-machine interaction effect.

FIG. 10 is a diagram of an architecture of a computing device 1000 according to an embodiment of this invention. The computing device may be used as a human-machine interaction apparatus to perform the optional embodiments of the foregoing human-machine interaction method. The computing device may be a vehicle-mounted apparatus or a terminal, for example, may be a vehicle-mounted processing apparatus like a vehicle, an in-vehicle infotainment on a vehicle, or a vehicle-mounted computer, or may be a terminal device like a mobile phone or a tablet. Alternatively, the computing device may be a chip or a chip system inside a terminal, for example, may be a chip or a processor in an in-vehicle infotainment or a vehicle-mounted computer, or may be a chip or a processor in a terminal device like a mobile phone or a tablet, or may be a conventional chip processor like a CPU or an MCU. Alternatively, the computing device may be a software and hardware system inside a terminal, for example, may be a system having software and hardware, like a human-machine interaction interface in a vehicle cockpit or an in-vehicle infotainment. As shown in FIG. 10, the computing device 1000 includes a processor 1010 and a memory 1020.

It should be understood that the computing device 1000 shown in FIG. 10 may further include a communication interface 1030, which may be configured to communicate with another device, and may specifically include one or more transceiver circuits or interface circuits.

The processor 1010 may be connected to the memory 1020. The memory 1020 may be configured to store program code and data. Therefore, the memory 1020 may be an internal storage module of the processor 1010, may be an external storage module independent of the processor 1010, or may be a component that includes an internal storage module of the processor 1010 and an external storage module independent of the processor 1010.

The computing device 1000 may further include a bus. The memory 1020 and the communication interface 1030 may be connected to the processor 1010 through the bus. The bus may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of indication, the bus is indicated by using only one line in FIG. 10. However, it does not indicate that there is only one bus or only one type of bus.

It should be understood that, in this embodiment of this invention, the processor 1010 may be a central processing unit (central processing unit, CPU). The processor may be alternatively another general-purpose processor, a digital signal processor (digital signal processor, DSP), an application-specific integrated circuit (application-specific integrated circuit, ASIC), a field programmable gate array (field programmable gate Array, FPGA) or another programmable logic device, a discrete gate or transistor logic device, or a discrete hardware component. The general-purpose processor may be a microprocessor, or the processor may be any conventional processor or the like. Alternatively, the processor 1010 uses one or more integrated circuits, and is configured to execute a related program, to implement a technical solution provided in this embodiment of this invention.

The memory 1020 may include a read-only memory and a random access memory, and provides instructions and data to the processor 1010. A part of the processor 1010 may further include a non-volatile random access memory. For example, the processor 1010 may further store device type information.

When the computing device 1000 runs, the processor 1010 executes computer-executable instructions in the memory 1020 to perform any operation step and any optional embodiment of the foregoing human-machine interaction method. For example, the processor 1010 may execute the computer-executable instructions in the memory 1020 to perform the human-machine interaction method in the embodiment corresponding to FIG. 6. When a user performs expression by using a voice, a gesture, an expression or the like that can be collected, the processor 1010 executes a collection instruction in the memory 1020, to control a multi-dimensional sensing unit of the vehicle to collect information like a voice, a gesture, an expression, or a body motion of the user, and sort out and generate information expressed by the user. The processor 1010 executes a recognition instruction in the memory 1020, so that an intention recognition unit of the vehicle recognizes an experience intention of the user based on the information expressed by the user. The processor 1010 may further execute a processing instruction in the memory 1020, so that a system policy unit of the vehicle obtains a plurality of recommended policy actions based on status information of an in-vehicle infotainment and the experience intention of the user, and adjusts scores of the plurality of policy actions based on policy preference information of the user. The processor 1010 executes an output instruction in the memory 1020, and outputs a policy action of controlling the vehicle based on adjusted scores, so that an action execution unit of the vehicle executes the policy action, to implement control on the vehicle.

It should be understood that the computing device 1000 according to this embodiment of this invention may correspond to a corresponding execution body of the method according to embodiments of this invention, and the foregoing and other operations and/or functions of modules in the computing device 1000 are separately intended to implement corresponding procedures of the methods in embodiments. For brevity, details are not described herein again.

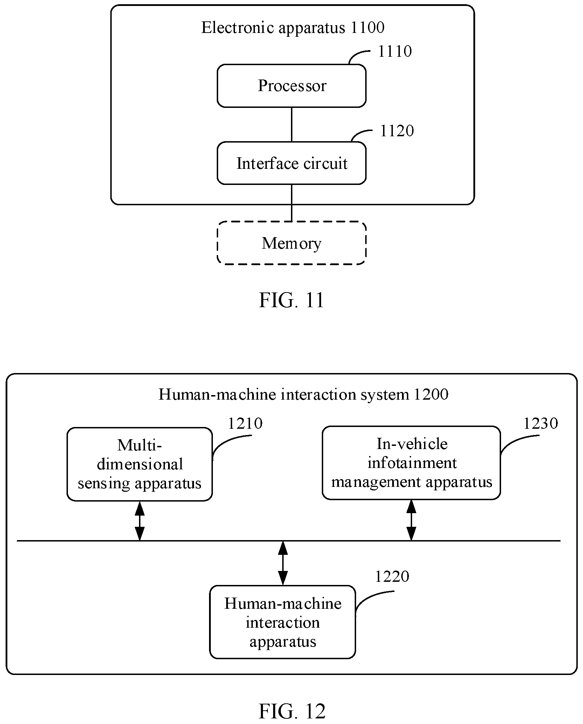

FIG. 11 is a diagram of an architecture of an electronic apparatus 1100 according to an embodiment of this invention. The electronic apparatus 1100 may be used as a human-machine interaction apparatus to perform the optional embodiments of the foregoing human-machine interaction method. The electronic apparatus may be a vehicle-mounted apparatus or a terminal, for example, may be a vehicle-mounted processing apparatus like a vehicle, an in-vehicle infotainment on a vehicle, or a vehicle-mounted computer, or may be a terminal device like a mobile phone or a tablet. Alternatively, the electronic apparatus may be a chip or a chip system inside a terminal, for example, may be a chip or a processor in an in-vehicle infotainment or a vehicle-mounted computer, or may be a chip or a processor in a terminal device like a mobile phone or a tablet, or may be a conventional chip processor like a CPU or an MCU. Alternatively, the electronic apparatus may be a software and hardware system inside a terminal, for example, may be a system having software and hardware, like a human-machine interaction interface in a vehicle cockpit or an in-vehicle infotainment. As shown in FIG. 11, the electronic apparatus 1100 includes a processor 1110 and an interface circuit 1120. The processor 1110 accesses a memory through the interface circuit 1120, the memory stores program instructions, and when the program instructions are executed by the processor, the processor is enabled to perform any operation step and any optional embodiment of the foregoing human-machine interaction method. For example, the processor 1110 may obtain, through the interface circuit 1120, computer-executable instructions in the memory, to execute the human-machine interaction method in the embodiment corresponding to FIG. 6. When the user performs expression by using a voice, a gesture, or an expression, or the like that can be collected, the processor 1110 obtains, through the interface circuit 1120, a collection instruction in the memory, and controls a multi-dimensional sensing unit of a vehicle to collect information like as a voice, a gesture, an expression, or a body action of a user, and sort out and generate information expressed by the user. The processor 1110 obtains a recognition instruction in the memory through the interface circuit 1120, so that an intention recognition unit of the vehicle recognizes an experience intention of the user based on the information expressed by the user. The processor 1110 may obtain a processing instruction in the memory through the interface circuit 1120, so that a system policy unit of the vehicle obtains a plurality of recommended policy actions based on status information of an in-vehicle infotainment and the experience intention of the user, and adjusts scores of the plurality of policy actions based on policy preference information of the user. The processor 1110 executes an output instruction in the memory through the interface circuit 1120, and outputs a policy action of controlling the vehicle based on adjusted scores, so that an action execution unit of the vehicle executes the policy action, to implement control on the vehicle.

In addition, the electronic apparatus may further include a communication interface, a bus, and the like. For details, refer to the description in the embodiment shown in FIG. 10. Details are not described again.

FIG. 12 is a diagram of an architecture of a human-machine interaction system according to an embodiment of this invention. The human-machine interaction system may perform the optional embodiments of the foregoing human-machine interaction method. The human-machine interaction system may be a terminal, for example, may be a vehicle-mounted processing apparatus like a vehicle, an in-vehicle infotainment on a vehicle, or a vehicle-mounted computer, or may be a terminal device like a mobile phone or a tablet. Alternatively, the human-machine interaction system may be a chip or a chip system inside a terminal, for example, may be a chip or a processor in an in-vehicle infotainment or a vehicle-mounted computer, or may be a chip or a processor in a terminal device like a mobile phone or a tablet, or may be a conventional chip processor like a CPU or an MCU. Alternatively, the human-machine interaction system may be a software and hardware system inside a terminal, for example, may be a system having software and hardware, like a human-machine interaction interface in a vehicle cockpit or an in-vehicle infotainment. As shown in FIG. 12, the human-machine interaction system 1200 includes a multi-dimensional sensing apparatus 1210, an in-vehicle infotainment management apparatus 1220, and a human-machine interaction apparatus 1230.

The multi-dimensional sensing apparatus 1210 may be implemented by the multi-dimensional sensing unit 110 in the embodiment shown in FIG. 2, for example, may be implemented by one or more of a microphone module, a camera module, and a human body sensor module, or may be implemented by an interface circuit between the multi-dimensional sensing unit 110 and the intention recognition unit 120 in the embodiment shown in FIG. 2. The in-vehicle infotainment management apparatus 1220 may be implemented by the device management unit 130 in the embodiment shown in FIG. 2, for example, may be implemented by one or more of an air conditioner controller, a seat controller, a speaker controller, a display controller, a light controller, a skylight controller, a window controller, a curtain controller, and an ambient sensor module, or may be implemented by the status processing unit 140 in the embodiment shown in FIG. 2, or may be implemented by an interface circuit between the status processing unit 140 and the system policy unit 150. The human-machine interaction apparatus 1230 may be implemented by one or more of the intention recognition unit 120, the system policy unit 150, and the action execution unit 160 in the embodiment shown in FIG. 2, or may be implemented by the human-machine interaction apparatus 900 in the embodiment shown in FIG. 9, for example, may be implemented by one or more of the recognition module 910, the recommendation module 920, the adjustment module 930, the output module 940, the training module 950, and the identity authentication module 960 in the human-machine interaction apparatus 900, or may be implemented by the computing device 1000 in the embodiment shown in FIG. 10, or may be implemented by the electronic apparatus 1100 in the embodiment shown in FIG. 11. Alternatively, the human-machine interaction system in this embodiment of this invention may be implemented by a combination of a processor and a software module.

In this embodiment, the human-machine interaction system 1200 may execute the human-machine interaction method and the optional embodiments of the human-machine interaction method in the embodiment shown in FIG. 6. For example, the multi-dimensional sensing apparatus 1210 may collect expression data of the user, generate information expressed by the user, and provide the information to the human-machine interaction apparatus 1230. The in-vehicle infotainment management apparatus 1220 collects device status data of the in-vehicle infotainment and environment status data of the in-vehicle infotainment, generates status information of the in-vehicle infotainment, and provides the status information to the human-machine interaction apparatus 1230. The human-machine interaction apparatus 1230 obtains the experience intention of the user based on the information expressed by the user. The human-machine interaction apparatus 1230 obtains a plurality of recommended policy actions based on the status information of the in-vehicle infotainment and the experience intention of the user, adjusts scores of the plurality of policy actions based on policy preference information of the user, and determines, based on adjusted scores, a policy action for controlling the in-vehicle infotainment, to execute control on the in-vehicle infotainment. The multi-dimensional sensing apparatus 1210, the in-vehicle infotainment management apparatus 1220, and the human-machine interaction apparatus 1230 may perform data or instruction communication in a wired manner (for example, an interface circuit), or may perform data or instruction communication in a wireless manner (for example, Bluetooth or Wi-Fi).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this invention.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this invention, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this invention may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this invention essentially, or the part contributing to the conventional technology, some of the technical solutions may be implemented in the form of a software product. The computer software product is stored in a storage medium and includes several instructions for instructing a computing device (which may be a personal computer, a server, a network device, or the like) to perform all or some of the steps of the methods described in embodiments of this invention. The foregoing storage medium includes: any medium that can store program code, like a USB flash drive, a removable hard disk, a read-only memory (Read-Only Memory, ROM), a random access memory (Random Access Memory, RAM), a magnetic disk, or an optical disc.

An embodiment of this invention further provides a computer-readable storage medium. The computer-readable storage medium stores a computer program, and when the program is executed by a processor, the program is used to perform a human-machine interaction method. The method includes at least one of the solutions described in the foregoing embodiments.

The computer storage medium according to this embodiment of this invention may be any combination of one or more computer-readable media. The computer-readable medium may be a computer-readable signal medium or a computer-readable storage medium. The computer-readable storage medium may be, for example, but not limited to, an electric, magnetic, optical, electromagnetic, infrared, or semi-conductor system, apparatus, or device, or any combination thereof. More specific examples (a non-exhaustive list) of the computer-readable storage medium include an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any proper combination thereof. In this specification, the computer-readable storage medium may be any tangible medium containing or storing a program. The program may be used by an instruction execution system, apparatus, or device, or may be used in combination with an instruction execution system, apparatus, or device.

The read-only signal medium may include a data signal propagated in a baseband or propagated as part of a carrier, where the data signal carries read-only program code. Such a propagated data signal may take a variety of forms, including but not limited to an electromagnetic signal, an optical signal, or any suitable combination thereof. The computer-readable signal medium may alternatively be any computer-readable medium other than the computer-readable storage medium. The computer-readable medium may send, propagate, or transmit the program used by the instruction execution system, apparatus, or device, or used in combination with the instruction execution system, apparatus, or device.

The program code included in the computer-readable medium may be transmitted by using any suitable medium, including but not limited to Wi-Fi, a wire, an optical cable, an RF, and the like, or any suitable combination thereof.

Computer program code for performing the operations in this invention may be written in one or more programming languages, or a combination thereof. The programming languages include an object-oriented programming language, like Java, Smalltalk, and C++, and also include a conventional procedural programming language, like a "C" language or a similar programming language. The program code may be executed entirely on a user computer, or some may be executed on a user computer as a separate software package, or some may be executed on a user computer while some is executed on a remote computer, or the code may be entirely executed on a remote computer or a server. When a remote computer is involved, the remote computer may be connected to a user computer by using any type of network, including a local area network (LAN) or a wide area network (WAN), or may be connected to an external computer (for example, connected by using an Internet service provider through the Internet).

This application further provides the following embodiments. It should be noted that the numbering of the following embodiments is not necessarily required to follow the numbering sequence of the preceding embodiments.
Embodiment 1. A human-machine interaction method, comprising:
   obtaining information expressed by a user, and obtaining an experience intention of the user based on the information expressed by the user;
   obtaining a plurality of recommended policy actions based on status information of an in-vehicle infotainment and the experience intention of the user, wherein the policy action is used to control the in-vehicle infotainment and is configured with a score;
   adjusting scores of the plurality of policy actions based on policy preference information of the user; and
   determining, based on adjusted scores, a policy action for controlling the in-vehicle infotainment, to execute control on the in-vehicle infotainment.
Embodiment 2. The method according to embodiment 1, wherein the determining, based on adjusted scores, a policy action for controlling the in-vehicle infotainment comprises:
   when the policy action for controlling the in-vehicle infotainment is determined from two or more policy actions, and a difference between the scores of the two or more policy actions is greater than a threshold, determining a policy action with a highest score as the policy action for controlling the in-vehicle infotainment.
Embodiment 3. The method according to embodiment 2, further comprising:
   when the policy action for controlling the in-vehicle infotainment is determined from two or more policy actions, and a difference between the scores of the two or more policy actions is less than the threshold, prompting the user with the two or more policy actions; and
   receiving selection information of the user, and determining, based on the selection information of the user, the policy action for controlling the in-vehicle infotainment.
Embodiment 4. The method according to embodiment 3, further comprising:
   updating the policy preference information of the user based on the selection information of the user.
Embodiment 5. The method according to embodiment 3, further comprising:
   updating correlation between any two or more of the information expressed by the user, the experience intention of the user, the plurality of recommended policy actions, and the policy preference information of the user based on the selection information of the user.
Embodiment 6. The method according to embodiment 1, wherein the determining, based on adjusted scores, a policy action for controlling the in-vehicle infotainment comprises:
   determining, based on the adjusted scores, two or more policy actions whose scores are higher than a specified value as policy actions for controlling the in-vehicle infotainment.
Embodiment 7. The method according to embodiment 1, wherein the adjusting scores of the plurality of policy actions based on policy preference information of the user comprises:
   performing weighted calculation on the scores of the plurality of policy actions based on the policy preference information of the user.
Embodiment 8. The method according to embodiment 1, wherein the information expressed by the user comprises one or more of voice information, action information, and facial expression information of the user.
Embodiment 9. The method according to embodiment 1 or 8, wherein when the experience intention of the user is obtained based on the information expressed by the user, the experience intention of the user is further obtained based on body feature information of the user.
Embodiment 10. The method according to embodiment 1, 8, or 9, wherein when the experience intention of the user is obtained based on the information expressed by the user, the experience intention of the user is further obtained based on session history information, wherein the session history information comprises a previously determined policy action for controlling the in-vehicle infotainment.
Embodiment 11. The method according to embodiment 1, wherein the status information of the in-vehicle infotainment comprises one or more of device status information of the in-vehicle infotainment and environment status information obtained by the in-vehicle infotainment.
Embodiment 12. The method according to embodiment 1, further comprising:
   obtaining identity information of the user, and obtaining the policy preference information of the user based on the identity information of the user.
Embodiment 13. A human-machine interaction apparatus, comprising:
   a recognition module, configured to: obtain information expressed by a user, and obtain an experience intention of the user based on the information expressed by the user;
   a recommendation module, configured to obtain a plurality of recommended policy actions based on status information of an in-vehicle infotainment and the experience intention of the user, wherein the policy action is used to control the in-vehicle infotainment and is configured with a score;
   an adjustment module, configured to adjust scores of the plurality of policy actions based on policy preference information of the user; and
   an output module, configured to: determine, based on adjusted scores, a policy action for controlling the in-vehicle infotainment, to execute control on the in-vehicle infotainment.
Embodiment 14. The apparatus according to embodiment 13, wherein the output module is specifically configured to:
   when the policy action for controlling the in-vehicle infotainment is determined from two or more policy actions, and a difference between the scores of the two or more policy actions is greater than a threshold, determine a policy action with a highest score as the policy action for controlling the in-vehicle infotainment.
Embodiment 15. The apparatus according to embodiment 14, wherein the output module is further configured to:
   when the policy action for controlling the in-vehicle infotainment is determined from two or more policy actions, and a difference between the scores of the two or more policy actions is less than the threshold, prompt the user with the two or more policy actions; and
   receive selection information of the user, and determine, based on the selection information of the user, the policy action for controlling the in-vehicle infotainment.
Embodiment 16. The apparatus according to embodiment 15, wherein the adjustment module is further configured to:
   update the policy preference information of the user based on the selection information of the user.
Embodiment 17. The apparatus according to embodiment 15, further comprising:
   a training module, configured to update correlation between any two or more of the information expressed by the user, the experience intention of the user, the plurality of recommended policy actions, and the policy preference information of the user based on the selection information of the user.
Embodiment 18. The apparatus according to embodiment 13, wherein the output module is specifically configured to:
   determine, based on the adjusted scores, two or more policy actions whose scores are higher than a specified value as policy actions for controlling the in-vehicle infotainment.
Embodiment 19. The apparatus according to embodiment 13, wherein the adjustment module is specifically configured to:
   perform weighted calculation on the scores of the plurality of policy actions based on the policy preference information of the user.
Embodiment 20. The apparatus according to embodiment 13, wherein the information expressed by the user comprises one or more of voice information, action information, and facial expression information of the user.
Embodiment 21. The apparatus according to embodiment 13 or 20, wherein when obtaining the experience intention of the user based on the information expressed by the user, the recognition module further obtains the experience intention of the user based on body feature information of the user.
Embodiment 22. The apparatus according to embodiment 13, 20, or 21, wherein when obtaining the experience intention of the user based on the information expressed by the user, the recognition module further obtains the experience intention of the user based on session history information, wherein the session history information comprises a previously determined policy action for controlling the in-vehicle infotainment.
Embodiment 23. The apparatus according to embodiment 13, wherein the status information of the in-vehicle infotainment comprises one or more of device status information of the in-vehicle infotainment and environment status information obtained by the in-vehicle infotainment.
Embodiment 24. The apparatus according to embodiment 13, further comprising:
   an identity authentication module, configured to: obtain identity information of the user, and obtain the policy preference information of the user based on the identity information of the user.
Embodiment 25. A vehicle, comprising:
   a multi-dimensional sensing apparatus, configured to: collect expression data of a user, and generate information expressed by the user;
   an in-vehicle infotainment management apparatus, configured to: collect device status data of an in-vehicle infotainment and environment status data of the in-vehicle infotainment, and generate status information of the in-vehicle infotainment; and
   the human-machine interaction apparatus according to any one of embodiments 13 to 24.
Embodiment 26. An electronic apparatus, comprising:
   a processor and an interface circuit, wherein the processor accesses a memory by using the interface circuit, the memory stores program instructions, and when the program instructions are executed by the processor, the processor is enabled to perform the human-machine interaction method according to any one of embodiments 1 to 12.
Embodiment 27. A computing device, comprising:
   a processor; and
   a memory, wherein the memory stores program instructions, and when the program instructions are executed by the processor, the processor is enabled to perform the human-machine interaction method according to any one of embodiments 1 to 12.
Embodiment 28. A computer-readable storage medium, wherein the computer-readable storage medium stores program instructions, and when the program instructions are executed by a computer, the computer is enabled to perform the human-machine interaction method according to any one of embodiments 1 to 12.
Embodiment 29. A computer program product, comprising program instructions, wherein when the program instructions are executed by a computer, the computer is enabled to perform the human-machine interaction method according to any one of embodiments 1 to 12.

It should be noted that embodiments described in this invention are merely some but not all of embodiments of this invention. Generally, components of embodiments of this invention described and shown in the accompanying drawings herein may be arranged and designed in various configurations. Therefore, the foregoing detailed descriptions of embodiments of this invention provided in the accompanying drawings are not intended to limit the scope of the claimed invention, but merely to represent selected embodiments of this invention. All other embodiments obtained by a person skilled in the art based on embodiments of this invention without creative efforts shall fall within the protection scope of this invention.

In this specification and claims, the terms "first, second, third, and the like" or similar terms such as a module A, a module B, and a module C are merely used to distinguish between similar objects, and do not represent a specific order of the objects. It may be understood that specific orders or sequences may be exchanged if permitted, so that embodiments of this invention described herein can be implemented in an order other than an order illustrated or described herein.

In the following descriptions, involved reference numerals such as S110 and S120 that indicate steps do not necessarily indicate that the steps are to be performed based on the order, and may further include intermediate steps or may be replaced with other steps. If permitted, a sequence of the steps may be changed, or the steps may be simultaneously performed.

The term "include" used in this specification and claims should not be construed as being limited to the content listed below, and does not exclude other elements or steps. It should be construed as specifying existence of a mentioned feature, whole, step, or part, but does not preclude existence or addition of one or more other features, wholes, steps, or parts and their groups. Therefore, the expression "a device including an apparatus A and an apparatus B" should not be limited to a device including only components A and B.

"One embodiment" or "an embodiment" mentioned in this specification indicates that a particular feature, structure or property that is described with reference to the embodiment is included in at least one embodiment of this invention. Therefore, the terms "in one embodiment" or "in an embodiment" that appear in this specification do not necessarily indicate a same embodiment, but may indicate a same embodiment. In addition, in embodiments of this invention, unless otherwise stated or there is a logic conflict, terms and/or descriptions between embodiments are consistent and may be mutually referenced, and technical features in different embodiments may be combined based on an internal logical relationship thereof, to form a new embodiment.

It should be noted that the foregoing is merely example embodiments and technical principles of this invention. A person skilled in the art may understand that this invention is not limited to specific embodiments described herein, and a person skilled in the art may make various obvious changes, readjustments, and replacements without departing from the protection scope of this invention. Therefore, although this invention is described in detail by using the foregoing embodiments, this invention is not limited to the foregoing embodiments, and may further include more other equivalent embodiments without departing from the concept of this invention. These embodiments all fall within the protection scope of this invention.

## Claims

1. A human-machine interaction method, comprising:
obtaining information expressed by a user, and obtaining an experience intention of the user based on the information expressed by the user;
determining a policy action for controlling the in-vehicle infotainment, to execute control on an in-vehicle infotainment;
generating, in response to a failure in executing the policy action, an alternative policy action according to information expressed by the user, wherein the alternative policy actions have the same or approximate execution effect as the original policy action.

2. The method according to claim 1, comprising:
obtaining a plurality of recommended policy actions based on status information of an in-vehicle infotainment and the experience intention of the user, wherein the policy action is used to control the in-vehicle infotainment and is configured with a score;
adjusting scores of the plurality of policy actions based on policy preference information of the user; and
wherein the determining a policy action for controlling the in-vehicle infotainment is based on adjusted scores and comprises:
when the policy action for controlling the in-vehicle infotainment is determined from two or more policy actions, and a difference between the scores of the two or more policy actions is greater than a threshold, determining a policy action with a highest score as the policy action for controlling the in-vehicle infotainment.

3. The method according to claim 2, further comprising:
when the policy action for controlling the in-vehicle infotainment is determined from two or more policy actions, and a difference between the scores of the two or more policy actions is less than the threshold, prompting the user with the two or more policy actions; and
receiving selection information of the user, and determining, based on the selection information of the user, the policy action for controlling the in-vehicle infotainment.

4. The method according to claim 3, further comprising:
updating the policy preference information of the user based on the selection information of the user.

5. The method according to claim 3, further comprising:
updating correlation between any two or more of the information expressed by the user, the experience intention of the user, the plurality of recommended policy actions, and the policy preference information of the user based on the selection information of the user.

6. The method according to claim 2, wherein the determining, based on adjusted scores, a policy action for controlling the in-vehicle infotainment comprises:
determining, based on the adjusted scores, two or more policy actions whose scores are higher than a specified value as policy actions for controlling the in-vehicle infotainment.

7. The method according to claim 2, wherein the adjusting scores of the plurality of policy actions based on policy preference information of the user comprises:
performing weighted calculation on the scores of the plurality of policy actions based on the policy preference information of the user.

8. The method according to claim 1, wherein the information expressed by the user comprises one or more of voice information, action information, and facial expression information of the user.

9. The method according to claim 1 or 8, wherein when the experience intention of the user is obtained based on the information expressed by the user, the experience intention of the user is further obtained based on body feature information of the user.

10. The method according to claim 1, 8, or 9, wherein when the experience intention of the user is obtained based on the information expressed by the user, the experience intention of the user is further obtained based on session history information, wherein the session history information comprises a previously determined policy action for controlling the in-vehicle infotainment.

11. The method according to claim 1, wherein the status information of the in-vehicle infotainment comprises one or more of device status information of the in-vehicle infotainment and environment status information obtained by the in-vehicle infotainment.

12. The method according to claim 1, further comprising:
obtaining identity information of the user, and obtaining the policy preference information of the user based on the identity information of the user.

13. The method according to any one of claims 1 to 12, comprising:
obtaining second-round information expressed by the user;
performing intention recognition, and policy recommendation based on the second-round information expressed by the user and the session history information;
generating an alternative policy action based on second-round information expressed by the user and the session history information, wherein the policy action generated previously is used as the session history information, and the alternative policy action has an execution effect substantially equivalent to an execution effect of the policy action.

14. An apparatus, comprising:
a processor and an interface circuit, wherein the processor accesses a memory by using the interface circuit, the memory stores program instructions, and when the program instructions are executed by the processor, the processor is enabled to perform the human-machine interaction method according to any one of claims 1 to 13.

15. A computer-readable storage medium, wherein the computer-readable storage medium stores program instructions, and when the program instructions are executed by a computer, the computer is enabled to perform the human-machine interaction method according to any one of claims 1 to 13.
